# EUROPÄISCHE PATENTSCHRIFT

(11) **EP 3 484 826 B1**
(45) Veröffentlichungstag und Bekanntmachung des Hinweises auf die Patenterteilung: **04.10.2023**
(21) Anmeldenummer: 17739952.4
(22) Anmeldetag: 10.07.2017
(51) Int. Cl.: C03B 40/027, C03B 23/09

(54) **VERFAHREN UND VORRICHTUNG ZUM FORMEN EINES GLÄSERNEN WERKSTÜCKS MIT MINIMALSCHMIERUNG**
METHOD AND DEVICE FOR MOLDING A GLASS WORKPIECE WITH MINIMAL LUBRICATION
PROCÉDÉ ET DISPOSITIF POUR MOULER UNE PIÈCE EN VERRE AVEC UNE LUBRIFICATION MINIMALE

(30) Priorität: 12.07.2016 DE 102016112730
(43) Veröffentlichungstag der Anmeldung: 22.05.2019
(73) Patentinhaber: SCHOTT Pharma AG & Co. KGaA, 55122 Mainz (DE); SCHOTT Pharma Schweiz AG, 9000 St. Gallen (CH)
(72) Erfinder: GLACKI, Alexander, 55116 Mainz (DE); KRUSE, Robert, 6800 Feldkirch (AT); MOSELER, Doris, 55257 Budenheim (DE); WASCHBÜSCH, Michael, 55278 Undenheim (DE); WITTE, Jörg, 64319 Pfungstadt (DE); FROST, Robert, 9034 Eggersriet (CH)
(74) Vertreter: Blumbach · Zinngrebe Patentanwälte PartG mbB
(86) Internationale Anmeldenummer: PCT/EP2017/067288
(87) Internationale Veröffentlichungsnummer: WO 2018/011148

(56) Entgegenhaltungen:
- EP-A1- 1 754 688
- US-A- 3 342 575
- US-A- 3 424 570
- US-A- 4 001 125
- US-A- 4 391 620
- US-A- 4 565 082

## Beschreibung

### Gebiet der Erfindung

Die Erfindung betrifft ein Verfahren und eine Vorrichtung zum Formen von gläsernen Werkstücken in einem Heißprozess. Im Speziellen betrifft die Erfindung ein Verfahren sowie eine Vorrichtung für einen entsprechenden Formungs- oder Umformprozess, welche es ermöglichen, den Einsatz von Schmiermitteln erheblich zu reduzieren.

### Hintergrund der Erfindung

Aus dem Stand der Technik sind Verfahren bekannt, bei welchen Glasgegenstände durch einen Umformprozess aus einem Werkstück, auch als Halbzeug bezeichnet, hergestellt werden. So werden Glasfläschchen, beispielsweise für pharmazeutische Anwendungen aus einem Glasrohr hergestellt, in dem ein kurzes Rohrstück an einem Ende bis zur Formgebungstemperatur des Glases erhitzt wird und mit einem oder mehreren Formgebungsschritten mit geeigneten Formwerkzeugen in die gewünschte Form gebracht werden. Die Innengeometrie wird üblicherweise mit Dornen geformt, die in das Rohrende eingebracht werden. Der Dorn weist hierbei während des Formgebungsprozesses eine geringere Oberflächenrotationsgeschwindigkeit auf als das Werkstück.

Gemäß einer Variante ist der Dorn feststehend und das Werkstück rotiert während des Formgebungsprozesses. Die Form und Ausmaße des Dorns definieren hierbei die Innengeometrie des Glasfläschchens. Die Umformung erfolgt durch äußere Formwerkzeuge, welche das Glasrohr gegen den Dorn drücken und gleichzeitig die äußere Seite des Glasrohrs ausformen. Hierbei dreht sich das Glasrohr und/oder das äußere Formwerkzeug. Bevorzugt erfolgt die Umformung an einem sogenannten Rundläufer. Die Umformung kann hierbei in mehreren Schritten, d.h. an mehreren Stationen des Rundläufers erfolgen.

Während des Werkzeugkontakts wird das gläserne Werkstück durch die Formwerkzeuge gekühlt. Zwischen den Formungsschritten muss das Werkstück daher gegebenenfalls wieder erwärmt werden. Die Temperaturführung wird so gestaltet, dass nach dem letzten Formgebungsschritt das Glas eine Temperatur erreicht, bei der das Werkstück formstabil ist.

Durch den Kontakt mit dem heißen Glas sind die Formwerkzeuge, insbesondere der Dorn, hohen Temperaturbelastungen ausgesetzt. Zudem muss ein direkter Kontakt der Formwerkzeuge mit dem heißen Glas vermieden werden, da dies zu einem Anhaften des Glases auf der Oberfläche der Formwerkzeuge führt. Dies ist insbesondere dann der Fall, wenn der Dorn eine sehr hohe Oberflächentemperatur aufweist. Aus dem Stand der Technik sind hierbei verschiedene Möglichkeiten zur Separation von Glas und Oberfläche der Formwerkzeuge bekannt.

So beschreibt die DE 101 57 258 B4 eine Vorrichtung zum Heißumformen von Gläsern, bei der der Dorn als inneres Formwerkzeug durch einen Gasfilm von der Glasoberfläche getrennt wird. Hierzu besteht der Dorn aus einem gasdurchlässigen Material. Über eine integrierte Gaszuleitung wird Gas in den Dorn geleitet und tritt an dessen Oberfläche aus, wobei ein Gasfilm gebildet wird, der die Oberfläche des Dorns vom Glas trennt.

In der in DE 101 57 258 B4 beschriebenen Vorrichtung muss der Dorn jedoch zwingend aus einem porösen, gasdurchlässigen Material bestehen. Die hier beschriebene Lösung kann somit nicht auf Vorrichtungen mit konventionellen Dornen, die zumeist aus einem Vollmaterial aufgebaut sind, angewendet werden.

DE 642907 A beschreibt ein Verfahren zur Herstellung von Glasrohren mit genauer Innengestalt und gibt an, dass ein zur Formung verwendeter Dorn von einem Trennmittel umhüllt wird, welches bevorzugt durch ein dauerhaftes, von oben her erfolgendes Zufließen des Trennmittels geschieht.

EP 0074200 A1 und US 4578099 A offenbaren jeweils Vorrichtungen, bei welchen eine Form zum Herstellen von beispielsweise aus Metall oder aus Glas bestehenden Formkörpern verwendet wird. Beide Dokumente betreffen Press-Blas-Maschinen oder ähnliche Systeme, welche beispielsweise für die Herstellung von Hohlglaskörpern Verwendung finden können. Bei den in diesen Dokumenten beschriebenen Vorrichtungen wird zunächst eine bestimmte Menge geschmolzenes Material, beispielsweise Glas, einer Form zugeführt, die mit einer Flüssigkeit belegt wird. Eine Beschichtung, insbesondere von inneren Formwerkzeugen ist diesen Dokumenten nicht zu entnehmen. US3424570 A lehrt eine Vorrichtung zum Formen des Halses einer Glasflasche mit Hilfe eines gekühlten Dorns. Der Dorn wird zur Schmierung zwischen den Formschritten mit Öl besprüht.

Bei der vorstehend beschriebenen Heißumformung von Glas wird in der Regel ein Schmiermittel, welches auch als Trennmittel bezeichnet wird, beispielsweise ein Öl oder eine Paste, verwendet. Hierbei wird das Schmiermittel in den Zwischentakten des Formprozesses, in denen die Werkzeuge keinen Glaskontakt haben, auf die Formwerkzeuge aufgebracht, beispielsweise durch ein Besprühen, Anspritzen, Aufspritzen oder Überspülen der Formwerkzeuge mit dem Schmiermittel. Hierbei wird das jeweilige Werkzeug vor jedem Glaskontakt erneut geschmiert. Um ein Anhaften oder eine Schädigung des Glases durch den direkten Werkzeugkontakt zu verhindern sind bislang große Ölmengen notwendig. Die verwendete Ölmenge beträgt dabei deutlich mehr als 0,1 g pro Werkzeug und Takt. Diese Ölmengen gewährleisten zwar, dass Glas und Formwerkzeug nicht aneinander haften, die Rückstände des Schmiermittels können jedoch das hergestellte Produkt und die Produktionsanlage stark verschmutzen. Des Weiteren entstehen auf Grund der hohen Temperaturen während des Umformprozesses Reaktionsprodukte der Schmiermittel. Diese können sich zudem in das formbare Glas einarbeiten bzw. mit dem Glas verbinden, was ebenfalls zu kosmetischen Fehlern führt. Darüber hinaus führen große Ölmengen nicht nur zu einer Kontamination des hergestellten Produktes, sondern auch zu einer Verschmutzung der Formwerkzeuge, der Produktionsanlage sowie der Produktionsumgebung. So kann beispielsweise die Anlage durch die großen Ölmengen durch vom Werkzeug ablaufendes Öl verschmutzt werden.

### Aufgabe der Erfindung

Eine Aufgabe der Erfindung liegt darin, eine Vorrichtung zum Formen eines Werkstücks aus Glas, insbesondere mit zumindest bereichsweise definierter Innen- und vorzugsweise auch definierter Außengeometrie bereit zu stellen, welche die vorstehend beschriebenen Nachteile des Stands der Technik nicht aufweist oder mildert. Eine weitere Aufgabe der Erfindung besteht in der Bereitstellung eines Verfahrens zur Formung von Glas.

### Beschreibung der Erfindung

Die Aufgabe der Erfindung wird bereits jeweils durch den Gegenstand der unabhängigen Ansprüche gelöst. Vorteilhafte Ausführungsformen und Weiterbildungen der Erfindung sind Gegenstand der Unteransprüche.

Die erfindungsgemäße Vorrichtung zum Formen eines Werkstücks aus Glas gemäß Anspruch 1 weist hierbei die folgenden Komponenten auf:
- eine Einrichtung zum Erwärmen des Werkstücks
- eine Formstation mit zumindest einem Formwerkzeug zum Formen des Werkstücks, wobei
- vorzugsweise das Formwerkzeug eine Wärmeableitung aufweist,
- wobei die Temperatur auf der Kontaktoberfläche des Formwerkzeugs während des Formprozesses unterhalb von 300°C gehalten ist
- und zumindest eine Sprühdüse zum Aufbringen eines Öls als Schmiermittel auf die Oberfläche des Formwerkzeugs, insbesondere auf eine Form- oder Kontaktoberfläche des Formwerkzeugs, wobei die pro Formschritt und Auftrag abgegebene Ölmenge kleiner als 0,1 g einstellbar ist.

Bevorzugt weist die Formstation zumindest ein inneres und ein äußeres Formwerkzeug zum Formen der inneren und äußeren Mantelflächen des Werkstücks auf. Insbesondere weist das innere Formwerkzeug eine Wärmeableitung auf, so dass die Temperatur des inneren Formwerkzeugs während des Ausformens des Werkstücks weniger als 300°C beträgt. Insbesondere vorteilhaft zum Ausformen von rohrförmigen Werkstücken hat sich ein inneres Formwerkzeug herausgestellt, welches als Dorn ausgebildet ist.

Hierbei wird die Wärmeableitung als diejenige Fähigkeit eines Körpers, insbesondere des inneren Formwerkzeugs, oder Dorns verstanden, insbesondere basierend auf der jeweiligen Wärmeleitfähigkeit des inneren Formwerkzeugs, oder Dorns, Wärme abzuleiten, beispielsweise von Form- oder Kontaktoberflächen zu einem weiteren Körper, wie einer Aufnahme und/oder an ein Kühlmedium, bevorzugt an eine Kühlflüssigkeit weiterzuleiten.

Bei bevorzugten Ausführungsformen ist mittels der Sprühdüse das Öl in Zwischentakten des Formprozesses auf die Oberfläche, insbesondere die Kontaktoberfläche des Formwerkzeugs aufbringbar.

Bevorzugt ist die Sprühdüse der Vorrichtung derart ausgebildet, dass ein richtungsstabiler Öl-Luftstrahl gebildet wird. Eine Anordnung der Sprühdüse in der Vorrichtung, bei der ein vertikaler Winkel γ der Sprühdüse zur Oberfläche des inneren Formwerkzeugs, insbesondere zur Dornoberfläche, im Bereich von 0-60° und ein horizontaler Winkel α zur Oberfläche des inneren Formwerkzeugs im Bereich von -85° bis 85° liegt, hat sich als besonders vorteilhaft herausgestellt.

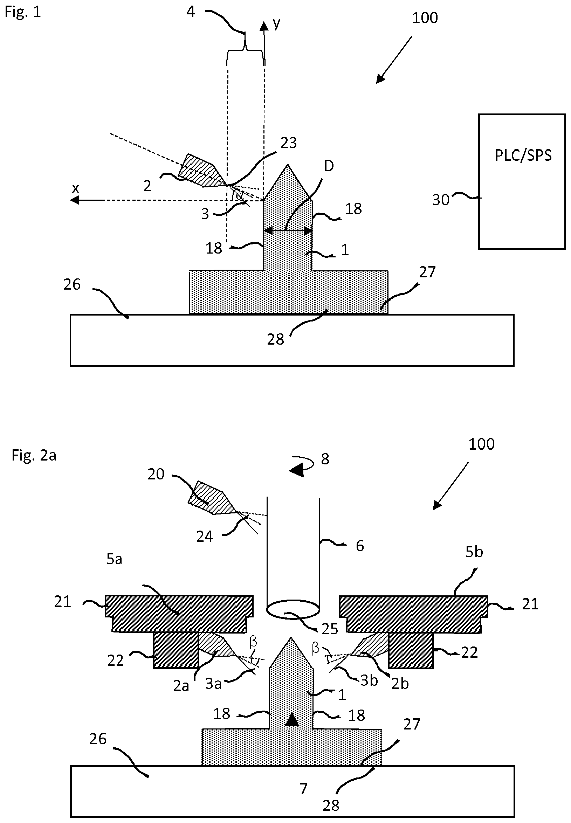

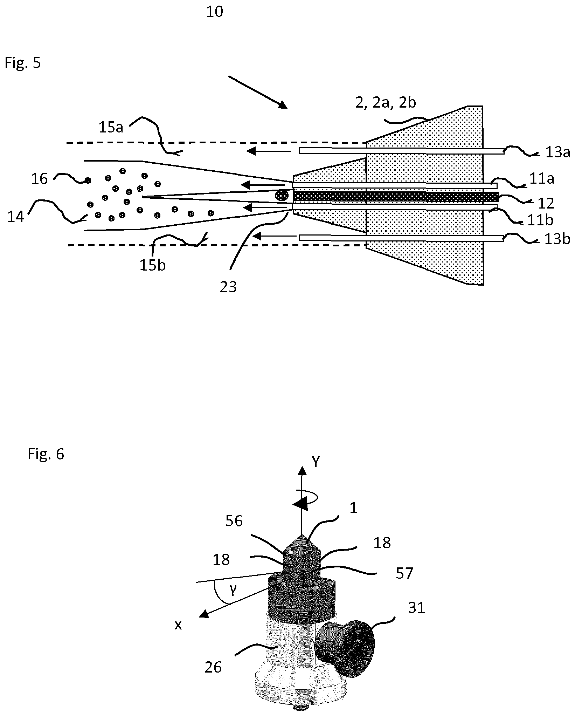

Den Figuren 2a und 6 ist jeweils ein abgeflachter Bereich 56, 57 zu entnehmen, an welchen die ansonsten im Wesentlichen zylindrische Kontaktfläche 18 in einen jeweils ebenen Abschnitt übergeht. Relativ zu der Ebene dieses abgeflachten Bereichs 56, 57 ist der vertikale Winkel γ der Sprühdüse 2, 2a, 2b zur Oberfläche des inneren Formwerkzeugs 1 definiert. Dieser vertikale Winkel γ erstreckt sich, wie insbesondere Figur 6 zu entnehmen, in einer senkrecht zur Y-Richtung liegenden Ebene und erfasst dabei eine Verdrehung um die Y-Richtung als Drehachse, welche positiv gezählt wird, wenn diese in Richtung des in Figur 6 um die Y-Achse verlaufenden Pfeils verläuft.

Die Ausformung des Werkstücks in die spezifische Form bzw. in die spezifischen Abmessungen des gewünschten Produktes kann hierbei ein unmittelbares Ergebnis des Formprozesses sein. Eine Ausformung des Werkstückes in die Produktform kann jedoch auch durch mehrere, verschiedene Formprozesse oder Formungsschritte, welche jeweils eine zumindest teilweise Formung des Werkstücks umfassen, erreicht werden. Neben den inneren und äußeren Mantelflächen des Werkstücks kann beispielsweise bei der Herstellung von Glasflaschen, - fläschchen oder -behältern mit den hier beschriebenen Vorrichtungen und Verfahren auch die Hals- und Fläschchenmündungsgeometrie ausgeformt werden.

Die Vorrichtung ist insbesondere zum Formen eines rohrförmigen Werkstücks ausgebildet. Hier werden die inneren und äußeren Mantelflächen, insbesondere in deren effektivem Durchmesser, dies bedeutet, dem bei dem Formen wirksamen und formgebenden Durchmesser maßgeblich durch die Geometrie des Rohres bestimmt. In einer bevorzugten Ausführungsform ist das innere Formwerkzeug als Dorn ausgebildet. Eine entsprechende Vorrichtung eignet sich insbesondere zur Herstellung von Glasbehältern wie Pharma-Primärverpackungen, beispielsweise von Fläschchen, Karpulen oder Spritzen, durch Umformen von Glasrohren. Der Außendurchmesser, somit der äußere Umfang des jeweils zu formenden Rohrs oder rohrförmigen Abschnitts des zu formenden Werkstücks kann bei Fläschchen ca. 16 bis 45 mm und dessen Wandstärke kann 1 bis 1,2 mm vor der Formung betragen und es werden bevorzugt Dorndurchmesser zwischen ca. 5 bis 20 mm verwendet, wobei als Dorndurchmesser hierbei der Durchmesser der im Wesentlichen zylindrischen Kontaktoberfläche des Dorns bezeichnet ist, welche bei der Formung in Kontakt mit dem Glas des Werkstücks tritt.

Je nach Produkt kann dieser Durchmesser der Kontaktoberfläche jedoch stark variieren und beispielsweise bei Karpulen und Spitzen deutlich kleinere Durchmesser sogar bis ca. nur 1 mm aufweisen.

Vorteilhaft beträgt der Abstand von der Sprühdüse zur Oberfläche des Formwerkzeugs 1 bis 50 mm, bevorzugt 10 bis 30 mm.

Besonders bevorzugt ist die Sprühdüse eine koaxiale Sprühdüse und/oder weist der Öl-Gasstrahl einen Öffnungswinkel > 1°, bevorzugt im Bereich von 2 bis 10°, besonders bevorzugt 2 bis 6° auf.

Die Homogenität des Auftrags kann gesteigert werden, wenn die Vorrichtung mehrere Sprühdüsen pro innerem Formwerkzeug, somit pro Dorn aufweist, bevorzugt zwei Sprühdüsen pro Dorn aufweist. Dabei kann die die Sprühdüse oder die Sprühdüsen fest mit der Formstation verbunden sein. Bei einer weiteren bevorzugten Ausführungsform sind die Sprühdüse oder die Sprühdüsen nicht stationär mit der Formstation verbunden und sind in den Zwischentakten des Formprozesses an den Dorn oder in dessen Nähe führbar.

Als Schmiermittel können bei der erfindungsgemäßen Vorrichtung beliebige Öle mit einer Viskosität < 600 mm²/s und einem Flammpunkt und/oder Pyrolysepunkt > 200°C, bevorzugt > 250 °C eingesetzt werden. Somit können hier die gleichen Öle wie bei den bekannten Standardprozessen eingesetzt werden.

Mit der Vorrichtung ist es möglich, die eingesetzte Menge an Schmiermittel bzw. Öl auf weniger als 0,1 g Öl pro Formschritt und Auftrag zu reduzieren. Bei der Vorrichtung handelt es sich somit um ein Minimalschmiersystem, wobei unter einer Minimalschmierung in Sinne der Erfindung ein Auftrag von weniger als 0,1 g Schmiermittel pro Formschritt und Auftrag verstanden wird. Bei der Minimalschmierung kann gemäß einer bevorzugten Ausführungsform der Auftrag pro Formschritt und Takt auf weniger als 0,01 g oder sogar weniger als 0,001 g verringert werden. Durch die geringe Menge an appliziertem Schmiermittel kann die Kontamination des Produktes, der Formwerkzeuge sowie der Produktionsumgebung maßgeblich verringert werden. Gleichzeitig wird jedoch bei der erfindungsgemäßen Vorrichtung eine ausreichende Schmierwirkung erreicht.

Dies kann bei bevorzugten Ausführungsformen insbesondere durch die jeweils einzelnen Komponenten der Vorrichtung und insbesondere durch deren vorteilhaftes Zusammenwirken gewährleistet werden, insbesondere wie dies den unabhängigen Ansprüchen zu entnehmen ist, wobei bevorzugte weitere Ausgestaltungen auch den Unteransprüchen zu entnehmen sind.

Das Formwerkzeug ist hierbei derart ausgestaltet, dass durch eine Wärmeableitung die Temperatur an der Oberfläche des Formwerkzeugs, insbesondere an der Kontaktoberfläche höchstens 300°C beträgt. Hierbei wird insbesondere als Kontaktoberfläche des Formwerkzeugs der Teil des Formwerkzeugs verstanden, der während des Formungs- oder Umformprozesses in Kontakt mit dem heißen Glas des zu formenden Werkstücks kommt. Die Oberflächentemperatur dieser Kontaktoberfläche wird hierbei mit einem Thermoelement im Inneren des Formwerkzeugs, d.h. unterhalb der Oberfläche, insbesondere der Kontaktoberfläche gemessen. Der Abstand der Oberfläche zum Thermoelement beträgt bei der Messung zwischen 0,5 mm und 1 mm, wodurch insbesondere sehr exakte Temperaturmessungen möglich sind.

Bevorzugt wird durch die Wärmeableitung gewährleistet, dass die Temperatur an der Oberfläche des Formwerkzeugs niedriger als die Verdampfungstemperatur und/oder des Flammpunktes bzw. der Pyrolysetemperatur des verwendeten Schmiermittels ist. Als besonders vorteilhaft in Hinblick auf eine geringe Kontamination von Produkt und Prozessumgebung sowie auf eine möglichst geringe Menge an appliziertem Schmiermittel haben sich hierbei Oberflächentemperaturen des Formwerkzeugs herausgestellt, die jeweils zumindest 10 °C oder sogar zumindest 50 °C unterhalb der Verdampfungstemperatur und/oder der Pyrolysetemperatur des Schmiermittels liegen.

Vorteilhaft kann die pro Formschritt und Auftrag abgegebene Ölmenge < 0,01 g und bevorzugt < 0,005 g und besonders bevorzugt < 0,001 g sein.

Ebenso vorteilhaft kann die Dauer des Sprühvorgangs, insbesondere eines Sprühstoßes zum Aufsprühen des Öls < 0,5 s, bevorzugt < 0,3 s, besonders bevorzugt 0,1 bis 0,2 s betragen.

Bei einer bevorzugten Ausführungsform ist das innere Formwerkzeug, insbesondere der Dorn mehrteilig, zumindest zweiteilig ausgeführt und ist dessen effektiver äußerer Durchmesser, somit der bei der Formung wirksame äußere Durchmesser der Kontaktoberflächen, mittels relativer Bewegung von zumindest zwei Hälften des inneren Formwerkzeugs, insbesondere des Dorns, einstellbar. Hierdurch können auch Rillen oder Erhebungen, insbesondere lippenartige oder ringförmige Erhebungen präzise geformt werden.

Gemäß einer Ausführungsform der Erfindung erfolgt die Wärmeableitung passiv. Bei dieser Ausführungsform besteht das innere Formwerkzeug ganz oder zumindest teilweise aus einem Material mit hoher Wärmeleitfähigkeit. Bevorzugt wird für das Formwerkzeug ein Material mit einer Wärmeleitfähigkeit von zumindest 400 W/mK und/oder, welches Kupfer enthält oder aus Kupfer besteht, verwendet. Hierbei kann das innere Formwerkzeug, insbesondere der Dorn einen Kern aufweisen, welcher ein Material mit einer Wärmeleitfähigkeit von zumindest 400 W/mK aufweist und/oder Kupfer enthält.

Vorteilhaft kann hierzu das innere Formwerkzeug, insbesondere der Dorn in einer Aufnahme derart gehalten sein, dass diesem Wärme entziehbar und/oder zuführbar ist, insbesondere mittels einer Wärmeaustauschfläche des inneren Formwerkzeugs, insbesondere Dorns, welche in direktem mechanischen Kontakt mit einer zugeordneten Wärmeaustauschfläche der Aufnahme steht. Hierbei kann bereits durch die Wärmeleitung so viel Wärme aus dem inneren Formwerkzeug, insbesondere dem Dorn abgeführt werden, dass dieser sicher die hier beschriebenen Temperaturen, zumindest an der jeweiligen Formoberfläche, welche auch als Kontaktoberfläche bezeichnet wird, aufweist.

Alternativ oder zusätzlich kann die Wärmeableitung des Formwerkzeugs aktiv erfolgen. So kann das Formwerkzeug im Inneren mit einem Kühlmedium, beispielsweise einer Kühlflüssigkeit, durchspült werden. Als besonders geeignet haben sich hierbei Kühlflüssigkeiten wie Wasser oder Öle herausgestellt. Eine Kühlung kann auch durch Luft oder den Einsatz von Aerosolen erfolgen. Um die erwünschte Kühlleistung bereitzustellen, kann hierbei die Temperatur des Kühlmediums und/oder dessen Durchflussmenge eingestellt werden. Bevorzugt wird hierbei ein Kühlmedium mit Raumtemperatur verwendet und dessen Durchflussmenge auf einen Wert eingestellt, der die erwünschte Temperatur des inneren Formwerkzeugs, insbesondere der Kontaktoberfläche des Dorns sicher auf den hier beschriebenen Werten hält.

Insbesondere mit einer aktiven Kühlung kann die Temperatur auf der Oberfläche, insbesondere der Kontaktoberfläche des Formwerkzeugs während des Formprozesses auf Temperaturen < 250°C oder sogar < 230°C betragen, insbesondere auf diese Temperatur gesenkt werden oder auf diese Temperaturen einstellbar sein. Es ist sogar eine Temperaturabsenkung auf Temperaturen unter 200 °C möglich. Hierdurch kann eine große Anzahl an verschiedenen Schmiermitteln verwendet werden.

In Kombination mit der erfindungsgemäßen geringen Menge an appliziertem Schmiermittel werden die auf dem Formwerkzeug entstehenden Verschmutzungen durch Pyrolyseprodukte, Verbrennungsprodukte oder reduzierter Schmiermittelrückstände reduziert, was sich vorteilhaft auf die Abstände der notwendigen Reinigungszyklen auswirkt.

Da die Wärme beim Formwerkzeug effektiv abgeführt wird, kann die Temperatur auf der Oberfläche des Formwerkzeugs, insbesondere an der jeweiligen Kontaktoberfläche auch während des Umformprozesses so eingestellt werden, dass die Oberflächentemperatur des Formwerkzeugs unterhalb des Flammpunktes und/oder der Pyrolysetemperatur des verwendeten Schmiermittels liegt. Dies gewährleistet, dass das aufgetragene Schmiermittel nicht verbrennt oder sich zersetzt. Dadurch wird auch die mit einer Zersetzung bzw. Verbrennung des Schmiermittels einhergehende Rauchentwicklung minimiert. Die starke Reduzierung der Rauchentwicklung verringert die Verschmutzung der Produktionsumgebung und führt zu einer verringerten Belastung für die Produktionsmitarbeiter.

Ein weiterer Vorteil der Minimalschmierung des Formwerkzeugs besteht darin, immer frisches "sauberes" Öl zur Schmierung verwendet wird und nicht im Kreislauf wiederverwendet wird. Somit wird vermieden, dass sich Verunreinigungen, Partikel und/oder Alkaliverbindungen im Öl anreichern. Dies gewährleistet, dass die Eigenschaften des Schmiermittels konstant bleiben. Dies garantiert eine langzeitstabile Reproduzierbarkeit der Minimalschmierung.

Des Weiteren wird durch die Reduzierung der Rauchentwicklung die Verschmutzung der Produkte erheblich verringert. Hierdurch kann in einer Weiterbildung der Erfindung die Dauer des sich dem Herstellungsprozess anschließenden Annealingprozesses verkürzt werden. Bei diesem Prozess werden die Glasprodukte nach dem Umformen in einem Entspannungsofen bei Temperaturen im Bereich von beispielsweise 560 bis 570°C erwärmt. Die Temperaturen im Entspannungsofen liegen somit in der Regel über der Pyrolysetemperatur des Schmiermittels sowie der Pyrolysetemperatur der während des Umformprozesses entstandenen Zersetzungsprodukte des Schmiermittels. Somit werden im Entspannungsofen nicht nur eventuell vorhandene Spannungen im Glas abgebaut, sondern durch Pyrolyse auch die Rückstände des Schmiermittels auf dem Glas entfernt. Da durch die erfindungsgemäße Vorrichtung die Menge dieser Rückstände erheblich reduziert wird, kann auch die Zeitdauer des Annealingprozesses verkürzt werden.

Mit der erfindungsgemäßen Vorrichtung kann die Menge des beim Umformprozess eingesetzten Schmiermittels erheblich reduziert werden. Neben der vorstehend beschriebenen Reduktion von Verbrennungs- und Pyrolyseprozessen des Schmiermittels durch eine Wärmeableitung beim Formwerkzeug ist hierbei ein gleichmäßiger und gerichteter Auftrag des Schmiermittels auf der Oberfläche des inneren Formwerkzeugs möglich.

Der Auftrag des Schmiermittels erfolgt mit zumindest einer Sprühdüse pro Formwerkzeug. Der Auftrag erfolgt hierbei bevorzugt in den Zwischentakten, wobei unter einem Zwischentakt die Zeitdauer zwischen zwei Umformprozessen verstanden wird.

Gemäß einer bevorzugten Ausführungsform ist die Sprühdüse dabei derart ausgebildet, dass beim Sprühstoß ein richtungsstabiler Öl-Gas-Strahl gebildet wird. Unter einem richtungsstabilen Öl-Gasstrahl wird hierbei auch ein Aerosol in einem definierten Sprühkegel verstanden. Dies ermöglicht eine präzise Positionierung sowie eine gleichmäßige Verteilung des Öls auf der Oberfläche des inneren Formwerkzeugs. Insbesondere wird durch die Sprühdüse eine unkontrollierte Ausbreitung eines Öl-Gas-Aerosols verhindert. Bevorzugt wird als Gas zur Erzeugung des Öl-Gasstrahls Druckluft verwendet.

Beispielsweise wird bei Koaxial-Sprühdüsen durch Abgabe einer Mantelsprühluft ein richtungsstabiler Öl-Luftstrahl erreicht. Es können jedoch auch andere Düsensysteme, beispielsweise Düsen mit einer Ringdüsenanordnung, verwendet werden, sofern mit diesen ein richtungsstabiler Öl-Gasstrahl mit einer gleichmäßigen Verteilung der Ölpartikel erzielt werden kann.

Es hat sich als besonders vorteilhaft herausgestellt, wenn die Sprühdüse in der Vorrichtung derart angeordnet ist, dass zwischen Düse und die zu benetzenden Oberflächen des Formwerkzeugs ein vertikaler Winkel γ im Bereich von 0-60° und ein horizontaler Winkel α im Bereich von -85° bis -85° gebildet wird. Bei dieser geometrischen Anordnung von Sprühdüse und der zu benetzenden Oberfläche wird nicht nur die Kontaktoberfläche, d.h. der Oberflächenbereich, der beim Umformen mit dem Glas in Kontakt kommt benetzt, sondern auch benachbarte Bereiche der Werkzeuge mit ebenfalls hohen thermischen Belastungen können benetzt werden. Dies ist vorteilhaft, da durch das Öl Korrosion vermieden werden kann. Gemäß einer bevorzugten Ausführungsform beträgt der vertikale Winkel zwischen Düse und innerem Formwerkzeug 0° und der horizontale Winkel 45°. Der laterale Abstand der Sprühdüse während des Sprühvorgangs zur Oberfläche des inneren Formwerkzeugs liegt bevorzugt im Bereich von 1 bis 50 mm. Ein Abstand im Bereich von 10 bis 30 mm hat sich hierbei als besonders vorteilhaft herausgestellt.

Die Sprühdüse kann hierbei gemäß einer Ausführungsform der Erfindung fest in der Vorrichtung installiert sein, d.h. der Abstand von Sprühdüse zur Oberfläche des zu besprühenden Formwerkzeugs ist konstant. Hier kann die beispielsweise Sprühdüse in die Formstation oder ein äußeres Formwerkzeug integriert sein. Auch eine Anbringung unterhalb eines äußeren Formwerkzeuge ist möglich.

Alternativ kann die Sprühdüse auch nicht stationär mit Formstation oder einem weiteren Formwerkzeug bzw. den weiteren Formwerkzeugen verbunden sein, sondern über eine bewegliche Vorrichtung in den Zwischentakten an die zu besprühenden Oberflächen des Formwerkzeugs geführt werden. Unter einem Zwischentakt wird hierbei die Zeitdauer zwischen zwei Umformprozessen verstanden.

Die Sprühdüse verfügt über eine variabel einstellbare Sprühzeit, die beispielsweise dem Maschinentakt angepasst werden kann. Über die Sprühzeit wird die Menge des abgegebenen Öls eingestellt. Insbesondere in Kombination mit der geometrischen Positionierung der Sprühdüse gewährleistet dies ein vollständiges, gleichmäßiges und reproduzierbares Auftragen der Minimalölmenge. Gemäß einer Ausführungsform beträgt die Dauer des Sprühstoßes zum Aufsprühen des Öls < 0,5 s, bevorzugt < 0,3 s oder < 0,2 s. Die jeweilige Dauer richtet sich hierbei nach dem Maschinentakt. Bevorzugt beträgt die Dauer des Sprühstoßes zumindest 0,1 s, um ein gleichmäßiges Öffnen der Ventile zu gewährleisten. Gemäß einer Ausführungsform liegt die Dauer des Sprühstoßes bzw. des Sprühvorgangs daher zwischen 0,1 und 0,5 s, bevorzugt zwischen 0,1 und 0,2 s.

Koaxial-Sprühdüsen haben sich hierbei als besonders vorteilhaft herausgestellt, prinzipiell können jedoch auch andere Sprühdüsen, beispielsweise Ringdüsen, verwendet werden. Bei Koaxial-Sprühdüsen können zusätzlich zu den Parametern Schmierstoffmenge und Sprühzeit die Einstellungen für die Mantelluft und somit das Sprühbildbeeinflusst werden. Die Verteilung des Ölfilms auf der Oberfläche des Formwerkzeugs kann beispielsweise über die Sprühzeit der Mantelluft geregelt werden. Beispielsweise kann mit zunehmender Sprühdauer der Öffnungswinkel des Ölfilms durch die Mantelluft vergrößert werden. Somit kann eine besonders zielgenaue und gleichmäßige Verteilung des Öls erreicht werden.

Dies ist bei den eingesetzten Minimalmengen von besonderer Bedeutung. Nach dem Versprühen des Öls kann mit reiner Sprühluft nachgeblasen und so die Verteilung auf der Oberfläche des Formwerkzeugs nochmals verbessert werden.

Gemäß einer Ausführungsform der Erfindung erfolgt auch die Schmierung der Rollen mit einem entsprechenden Minimalschmiersystem.

In einer Weiterbildung der Erfindung weist die Vorrichtung zumindest zwei Sprühdüsen pro Formwerkzeug auf. Hierdurch wird die Ölverteilung nochmals verbessert und muss jede der beiden Sprühdüsen nur jeweils die Hälfte der für eine Vorrichtung mit einer Sprühdüse angegebene Menge an Öl abgeben.

Insbesondere durch die Kombination eines inneren Formwerkzeugs mit einer guten Wärmeableitung und der erfindungsgemäßen Anordnung der Sprühdüse bzw. der Sprühdüsen zur Oberfläche des inneren Formwerkzeugs kann die Minimalschmierung realisiert und die aus dem Stand der Technik bekannten Nachteile einer konventionellen Schmierung beseitigt werden. Gemäß einer Ausführungsform kann die pro Formschritt und Auftrag abgegebene Ölmenge auf weniger als 0,01 g, weniger als 0,005 g oder sogar weniger als 0,001 g reduziert werden. Dies entspricht einer Verringerung der zugeführten Ölmenge im Vergleich zum Stand der Technik um mehr als zwei Größenordnungen.

Hierbei sind bei der Ausführungsform der Vorrichtung die bei der Formung mit dem Glas des Werkstücks in Kontakt tretenden Bereiche der jeweiligen Formoberfläche, insbesondere der Kontaktoberfläche sowie vorzugsweise auch ein Bereich eines kegelstumpfförmigen Abschnitts des inneren Formwerkzeugs, somit des Dorns, jeweils vollflächig mit einer das Öl umfassenden Bedeckungsschicht versehbar.

Vorteilhaft kann die Bedeckungsschichtdicke der Bedeckungsschicht Werte von bis zu <750 µm, bevorzugt bis zu <75 µm aufweisen und insbesondere bevorzugt kann die Bedeckungsschicht auch nur eine oder nur bis zu zehn molekulare Monolagen des Öls umfassen.

Des Weiteren betrifft die Erfindung ein Verfahren zum Formen eines Werkstücks unter Einbezug einer Minimalschmierung für das Benetzen von Formwerkzeugen. Hierbei umfasst das Verfahren zumindest ein Erwärmen des Werkstücks bis zum Erweichen sowie ein Ausformen der äußeren und inneren Mantelflächen des Werkstücks durch zumindest ein Formwerkzeug in zumindest einem Formungsschritt als Verfahrensschritte. Bevorzugt wird das Werkstück hierbei durch ein inneres und ein äußeres Formwerkzeug geformt. Bevorzugt ist das Werkstück als Rohr, insbesondere als ein Rohr mit einem runden oder ellipsoiden Querschnitt ausgebildet.

Das Werkstück wird zunächst auf eine Temperatur um den die Formgebungstemperatur aufgeheizt und durch Kontakt mit dem Formwerkzeug geformt. Bevorzugt wird zur Ausformung ein inneres Formwerkzeug in das Werkstück eingeführt und ein äußeres Formwerkzeug auf das Werkstück aufgebracht, so dass das Werkstück geformt wird. Das innere Formwerkzeug ist hierbei bevorzugt als Dorn ausgebildet.

Gemäß einer Variante des erfindungsgemäßen Verfahrens beträgt Oberflächentemperatur des Formwerkzeugs auch während des Formungs- oder Umformprozesses, d.h. auch bei Kontakt mit dem erwärmten Werkstück, maximal 300°C.

Als besonders vorteilhaft hat sich eine Temperatur auf der Kontaktoberfläche während des Formprozesses herausgestellt, die kleiner als die Verdampfungstemperatur und/oder als der Flammpunkt des verwendeten Öls ist. Hierbei wird als Kontaktoberfläche des Formwerkzeugs diejenige Oberfläche des Formwerkzeugs, insbesondere jeweils des Dorns verstanden, welche mit dem zu formenden Material, insbesondere dem Glas, in Kontakt tritt oder während der Formung in Kontakt treten kann. Als in Kontakt treten wird hierbei kein direkter mechanischer Kontakt verstanden, sondern es wird dabei berücksichtigt, dass sich zwischen der Kontaktoberfläche und dem zu formenden Material, insbesondere dem Glas jeweils ein Film des aufgesprühten Öls und zumindest eine Molekül-Monolage des aufgesprühten Öls befindet.

Vorteilhaft kann dieses durch die Ausgestaltung des Formwerkzeugs erreicht werden, welche eine effiziente Ableitung der Wärme von der Oberfläche des Formwerkzeugs ermöglicht. Gemäß einer Ausführungsform der Erfindung erfolgt die Wärmeableitung passiv. Bei dieser Ausführungsform besteht das Formwerkzeug, insbesondere das innere Formwerkzeug, ganz oder zumindest teilweise aus einem Material mit hoher Wärmeleitfähigkeit, beispielsweise aus Kupfer. Alternativ oder zusätzlich kann auch eine aktive Wärmeableitung erfolgen. Hierbei kann das Formwerkezug, beispielsweise ein Dorn, bereichsweise mit einem Kühlmedium, beispielsweise einer Kühlflüssigkeit, insbesondere während des Formungsschritts durchspült sein.

Generell beträgt die Temperatur auf der Kontaktoberfläche des Formwerkzeugs während des Formprozesses < 250°C, bevorzugt < 200°C.

Während des Umformens ist die Oberfläche, zumindest die Formungs- oder Kontaktoberfläche des Formwerkzeugs bzw. des Dorns bevorzugt vollständig mit einem Öl als Schmiermittel bedeckt. Unter einer vollständigen Oberflächenbedeckung wird im Sinne der Erfindung eine Bedeckung mit zumindest einer Molekül-Monolage Öl, welche auch als molekulare Monolage bezeichnet wird, auf der Kontaktoberfläche des Formwerkzeugs, somit der Kontaktoberfläche des Dorns verstanden.

Bevorzugt ist insbesondere hierbei die Temperatur der Kontaktoberfläche des Formwerkzeugs, insbesondere die Kontaktoberfläche des Dorns, während des Formprozesses kleiner als die Verdampfungstemperatur und/oder als der Flammpunkt des verwendeten Öls, bevorzugt 10°C niedriger als die Verdampfungstemperatur und/oder als der Flammpunkt des verwendeten Öls.

Das Öl wird vor dem Verfahrensschritt des Ausformens bzw. zwischen zwei Formprozessen mit zumindest einer Sprühdüse auf die Dornoberfläche aufgebracht. Hierbei ist die Sprühdüse bevorzugt derart ausgebildet, dass ein richtungsstabiler Öl-Gasstrahl von der Sprühdüse abgegeben wird. Der Öl-Gasstrahl weist hierbei bevorzugt einen Öffnungswinkel > 1°, besonders bevorzugt im Bereich von 2 bis 10° auf und ermöglicht, anders einen präzisen Auftrag des Öls auf die Kontaktoberfläche bzw. Oberfläche des Formwerkzeugs.

Gemäß einer Ausführungsform ist die Sprühdüse ist hierbei so zum Formwerkzeug angeordnet, dass ein vertikaler Winkel γ zur Oberfläche des Formwerkzeugs, beispielsweise zur Dornoberfläche, im Bereich von 0-60° und ein horizontaler Winkel α zur Oberfläche des Formwerkzeugs im Bereich von 0-85° gebildet wird.

Die Sprühzeiten der Sprühdüse bzw. der Sprühdüsen betragen weniger als 0,5 s, bevorzugt weniger als 0,3 s und besonders bevorzugt zwischen 0,1 und 0,2 s und können variabel eingestellt werden, so dass jederzeit ein gleichmäßiges und reproduzierbares Auftragen der Ölmenge pro Auftrag oder Sprühstoß bzw. Maschinentakt gewährleistet ist. Bevorzugt ist die pro Maschinentakt und Formschritt abgegebene Ölmenge < 0,01 g oder sogar < 0,001 g.

Das erfindungsgemäße Verfahren zur Minimalschmierung ist insbesondere für Prozesse mit Heißumformungen von Glas durch Formwerkzeuge geeignet, bei denen neben der Reibung bzw. Haftung des Glases an den Formwerkzeugen auch eine Kontamination der Produkte sowie der Produktionsumgebung minimiert werden sollen. Insbesondere eignet sich das erfindungsgemäße Verfahren sowie die erfindungsgemäße Vorrichtung zur Herstellung von Pharmaverpackungen wie Fläschchen, Karpulen oder Spritzen aus Glasrohren.

Erfindungsgemäß wird ein Verfahren zum Formen eines Werkstücks aus Glas, vorzugsweise mit einer Minimalschmierung, angegeben, umfassend die folgenden Verfahrensschritte:
- Erwärmen des vorzugsweise rohrförmigen Werkstücks aus Glas bis zum Erweichen des Glases,
- Formen des Werkstücks mit einem Formwerkzeug, insbesondere mit einer Vorrichtung zum Formen eines Werkstücks aus Glas gemäß einem der vorstehenden Ansprüche, in einem Formungsschritt, wobei
- die Temperatur der Kontaktoberfläche des Formwerkzeugs mit dem Werkstück während des Ausformens bei höchstens 300°C gehalten wird und
- zumindest die Kontaktoberfläche des Formwerkzeugs mit einem Öl als Schmiermittel bedeckt wird, wobei
- das Öl vor dem Formprozess und/oder zwischen zwei Formprozessen, vorzugsweise mit zumindest einer Sprühdüse, auf die Oberfläche des Formwerkzeugs aufgesprüht wird und wobei pro Formschritt weniger als 0,1 g Öl abgegeben werden.

Bei diesem Verfahren kann die gesamte Umformung oder Ausformung des zu formenden Werkstücks aus Glas in einem einzigen Formungsschritt erfolgen oder auch mehrere, nacheinander durchgeführte Formungsschritte umfassen, welche dann zur vollständigen Umformung oder Ausformung des geformten, aus Glas bestehenden Werkstücks führen.

Bevorzugt werden bei dem Verfahren die inneren und äußeren Mantelflächen des Werkstücks durch zumindest ein inneres und ein äußeres Formwerkzeug geformt oder ausgebildet, wobei bevorzugt das innere Formwerkzeug als Dorn ausgebildet ist.

Vorteilhaft wird bei dem Verfahren durch die Sprühdüse Öl und Gas, insbesondere Luft ausgestoßen, so dass ein richtungsstabiler Öl-Gasstrahl, bevorzugt ein richtungsstabiler Öl-Gasstrahl mit einem Öffnungswinkel > 1° gebildet wird.

Bei den bevorzugten Ausführungsformen des Verfahrens wird die Sprühdüse so angeordnet, dass ein vertikaler Winkel γ zur Dornoberfläche im Bereich von 0 bis 60° und ein horizontaler Winkel α zur Dornoberfläche im Bereich von -85° bis 85° liegt.

Bevorzugt beträgt bei dem Verfahren die pro Formschritt und Auftrag, insbesondere Sprühstoß abgegebene Ölmenge < 0,005 g und besonders bevorzugt < 0,001 g.

Vorteilhaft beträgt die Dauer eines Sprühstoßes bei dem Verfahren zum Sprühen oder Aufsprühen des Öls < 0,5 s, bevorzugt < 0,3 s und besonders bevorzugt 0,1 bis 0,2 s. Bei den besonders bevorzugten Ausführungsformen des Verfahrens beträgt die Temperatur der Form- oder Kontaktoberfläche des Formwerkzeugs während des Formprozesses < 250°C, bevorzugt < 200°C.

Äußerst vorteilhaft ist es, wenn bei dem Verfahren die Temperatur der Form- oder Kontaktoberfläche des Formwerkzeugs während des Formprozesses oder Formens kleiner als die Verdampfungstemperatur und/oder als der Flammpunkt des verwendeten Öls, bevorzugt zumindest 10°C niedriger als die Verdampfungstemperatur und/oder als der Flammpunkt des verwendeten Öls ist.

Vorteilhaft wird bei dem Verfahren dem inneren Formwerkzeug während des Formprozesses mittels Wärmeleitung durch Festkörperkontakt Wärme zu oder abgeführt.

Alternativ oder zusätzlich kann bei dem Verfahren das innere Formwerkzeug, insbesondere der Dorn während des Formprozesses mit einem Kühlmedium, bevorzugt einer Kühlflüssigkeit durchspült werden.

Bei dem Verfahren werden die bei der Formung mit dem Glas des Werkstücks in Kontakt tretenden Bereiche der jeweiligen Formoberfläche, insbesondere der Kontaktoberfläche sowie ein Bereich eines kegelstumpfförmigen Abschnitts des inneren Formwerkzeugs, somit des Dorns, jeweils vollflächig mit einer das Öl umfassenden Bedeckungsschicht versehen werden.

Die Bedeckungsschichtdicke der Bedeckungsschicht kann dabei Werte von bis zu <75 µm aufweist und insbesondere eine, bevorzugt bis zu zehn molekulare Monolagen des Öls umfassen.

Nachfolgend wird die Erfindung an Hand der Figuren 1 bis 12 näher beschrieben. Es zeigen:
- Figur 1: eine schematische Darstellung der Positionierung einer Sprühdüse relativ zu einem Dorn als innerem Formwerkzeug von der Seite her gesehen,
- Figur 2a: eine schematische Seitenansicht einer bevorzugten Ausführungsform der Vorrichtung, bei welcher auch weitere Formwerkzeuge, insbesondere äußere Formwerkzeuge gezeigt sind, die zur Formung einer Außenkontur des zu formenden Werkstücks verwendbar sind,
- Figur 2b: eine Aufsicht auf die in Figur 2a dargestellte Ausführungsform von oben, somit entgegen der in Figur 2a dargestellte Richtung des Pfeils 7,
- Figur 3: eine schematische Querschnittsansicht eines Formwerkzeugs, welches als Dorn mit einem Kupferkern ausgebildet ist, bei welcher die Schnittebene in der in Figur 2b gezeigten Schnittebene AA verläuft,
- Figur 4: eine schematische Querschnittsansicht eines aktiv gekühlten Dorns, bei welcher die Schnittebene in der in Figur 2b gezeigten Schnittebene AA verläuft,
- Figur 5: eine schematische Querschnittsansicht, einer Sprühdüse, bei welcher die Schnittebene durch die Längs- und Symmetrieachse der Sprühdüse verläuft und in welcher das Sprühbild dieser koaxialen Sprühdüse zu erkennen ist,
- Figur 6: eine perspektivische Ansicht auf eine Ausführungsform eines inneren Formwerkzeugs, insbesondere Dorns, bei welcher das innere Formwerkzeug mittels einer Rastvorrichtung an einer zugeordneten Aufnahme der Formstation in seiner betriebsbereiten Stellung gehalten und passiv gekühlt ist,
- Figur 7: eine Ansicht der Aufnahme des inneren Formwerkzeugs oder Dorns von unten her gesehen bei welcher Kühlkanäle erkennbar sind, welche in der Aufnahme verlaufend dargestellt sind,
- Figur 8: eine Aufsicht auf eine weitere Ausführungsform eines inneren Formwerkzeugs, insbesondere Dorns, bei welcher das innere Formwerkzeug mittels einer Rastvorrichtung an einer zugeordneten Aufnahme der Formstation in seiner betriebsbereiten Stellung gehalten und passiv gekühlt ist, und das innere Formwerkzeug, insbesondere der Dorn zweiteilig ausgeführt ist,
- Figur 9: eine Ansicht der Aufnahme des inneren Formwerkzeugs oder Dorns der weiteren Ausführungsform von unten her gesehen bei welcher Kühlkanäle erkennbar sind, welche in der Aufnahme verlaufen,
- Figur 10: eine Aufsicht auf ein Detail, insbesondere den oberen Bereich der in Figur 8 gezeigten weiteren Ausführungsform des inneren Formwerkzeugs, insbesondere des Dorns, in einer vergrößerten Darstellung.

### Detaillierte Beschreibung der Erfindung

Bei der nachfolgenden Beschreibung bevorzugter und besonders bevorzugten Ausführungsformen wird auf die beigeschlossenen Figuren Bezug genommen, welche lediglich um der Klarheit willen jeweils nicht maßstabsgerecht dargestellt sind.

Ferner bezeichnen gleiche Bezugszeichen bei den verschiedenen offenbarten Ausführungsformen gleiche oder gleich wirkende Eigenschaften oder Merkmale.

Bei der Beschreibung des Verfahrens werden die Begriffe des Formens, eines Formprozesses sowie des Aus- oder Umformens im Rahmen dieser Offenbarung wie folgt gebraucht. Das Formen beschreibt den für das Werkstück 6 formgebenden Vorgang, welcher während des Formprozesses durchgeführt wird. Das Formen kann hierbei einen oder mehrere Formungsschritte umfassen, welche jeweils eine zumindest teilweise Formung des aus Glas bestehenden Werkstücks bewirken. Soweit dieser Formprozess bis zu seinem Abschluss, insbesondere bis zur endgültigen gewünschten Formung des Werkstücks 6 durchgeführt wird, wird dieses auch als Aus- oder Umformen bezeichnet.

In Fig. 1 ist schematisch die Positionierung einer Sprühdüse 2 relativ zum Dorn 1 als innerem Formwerkzeug dargestellt. Der Dorn 1 weist eine im Wesentlichen zylindrische Gestallt auf, welche sich zu deren oberen Ende hin kegelstumpfartig verjüngt. Dabei stellen die äußeren zylindrischen Mantelflächen jeweils Form- oder Kontaktoberflächen 18 zur Formung des erwärmten Glases des Werkstücks 6 zur Verfügung. Die Kontaktoberfläche 18 des Dorns 1 kann in der Y-Richtung eine Länge von 5 bis 20 mm und in seinem zylindrischen Bereich einen Durchmesser D von 5 bis 20 mm aufweisen. Für bestimmte Ausführungsformen des zu formenden Wertstücks 6 kann dieser Durchmesser D auch nur etwa 1 mm betragen oder sogar kleiner sein. Der in Figur 1 dargestellte Dorn 1 besteht vorzugsweise aus einem HSS-Stahl, somit einem Schnellarbeitsstahl. Die Sprühdüse 2 kann gemäß dieser Ausführungsform stationär in der im Ganzen mit dem Bezugszeichen 100 versehenen Formstation und/oder an der Rollenhalterung 22, welche jeweils die äußeren Formwerkzeuge 5a, 5b drehbar, jedoch in axialer Richtung fixiert hält, integriert sein oder alternativ in einer nicht-stationären Konfiguration über eine geeignete, bewegliche Vorrichtung an den Dorn herangeführt werden.

Die Formstation 100 ist mit deren jeweiligen sensorischen und/oder aktorischen Baugruppen mit einer speicherprogrammierbaren Steuerung 30 verbunden, welche auch als PLC/SPS bezeichnet ist und in welcher Tabellen und entsprechende Programme zur Ablaufsteuerung, insbesondere der beschriebenen Verfahrensschritte hinterlegt sind. Um der Einfachheit der Darstellung willen sind die jeweiligen, dem Fachmann geläufigen Verbindungen der PLC/SPS zu den jeweiligen sensorischen und aktorischen Baugruppen jedoch nicht explizit dargestellt.

Die Sprühdüse 2 weist beim Sprühvorgang einen Abstand 4 zur Oberfläche, insbesondere zur Kontaktoberfläche 18 des Dorns 1 auf, wobei der Abstand 4 von der Öffnung 23 am Kopf der Sprühdüse 2 beim Sprühvorgang bis zur Kontaktoberfläche 18 in lateraler Richtung somit in Richtung entgegen dem mit x bezeichneten Pfeil gemessen und auch als lateraler Abstand bezeichnet wird. Als besonders vorteilhaft haben sich hierbei seitliche Abstände zwischen der Öffnung der Sprühdüse 2 und der Kontaktoberfläche 18 im Bereich von 1 bis 50 mm, besonders im Bereich von 10 bis 30 mm herausgestellt. In Y-Richtung kann die Höhe der jeweiligen Düse 2, 2a, 2b so gewählt werden, dass die Öffnung 23 der jeweiligen Düse 2, 2a, 2b etwas oberhalb oder im Bereich der jeweiligen Kontaktoberfläche 18 des Dorns 1 liegt, sodass ein vollflächiger Auftrag des Öls zumindest auf der jeweiligen Kontaktoberfläche 18 sowie die Bereiche 47 sichergestellt ist.

Je nach baulichen Abmessungen kann die jeweilige Düse 2, 2a, 2b auch, in x-Richtung gesehen unterhalb der jeweiligen Kontaktoberfläche 18 angeordnet sein, insbesondere, wenn negative Winkel α Verwendung finden.

Der Winkel α beschreibt den Winkel der Sprühdüsenrichtung horizontal zur Dornoberfläche somit relativ zu der mit x-bezeichneten und mit einem Pfeil x dargestellten Achse. Die Sprühdüsenrichtung ist der detaillierteren Darstellung der Figur 5 einfacher zu entnehmen und entspricht der Richtung der in Figur 5 dargestellten Pfeile und somit im Wesentlichen der Längsrichtung der jeweils parallel zueinander ausgerichteten Luftkanäle 11a, 11, der Ölzuleitung 9 und den Luftkanälen 13a, 13b, welche insgesamt zur Austrittsrichtung des sich ergebenden Öl-Luftstrahls 14 führen.

Gemäß einer bevorzugten Ausführungsform beträgt der Winkel α 0 bis 85°, bevorzugt 30 bis 50°, besonders bevorzugt 45°. Eine entsprechende Positionierung der Sprühdüse 2, 2a, 2b während des Sprühvorgangs ermöglicht es auch, mit den erfindungsgemäßen geringen Ölmengen eine gleichmäßige und vollständige Benetzung oder Bedeckung der Dornoberfläche mit dem Sprühstrahl 3. Je nach baulichen Abmessungen der Formstation 100 kann bei einer unter dem inneren Formwerkzeug 1 angeordneter Düse 2, 2a, 2b auch ein negativer Winkel α eingestellt werden, der beispielsweise bis -85° betragen kann.

Hierbei wird bei allen bevorzugten Ausführungsformen der Sprühstrahl 3 jeweils so eingestellt, insbesondere ausgerichtet, dass es vorzugsweise bei jedem Sprühstoß und vorzugsweise mit nach dem Sprühstoß nachgeblasener Luft zu einer vollflächigen Benetzung oder Bedeckung zumindest der jeweiligen Formoberflächen, insbesondere Kontaktoberflächen 18 und vorzugsweise des nachfolgend noch detaillierter beschriebenen Bereichs 47 des kegelstumpfförmigen Abschnitts 46 des inneren Formwerkzeugs oder Dorns 1 mit dem aufgetragenen Öl kommt.

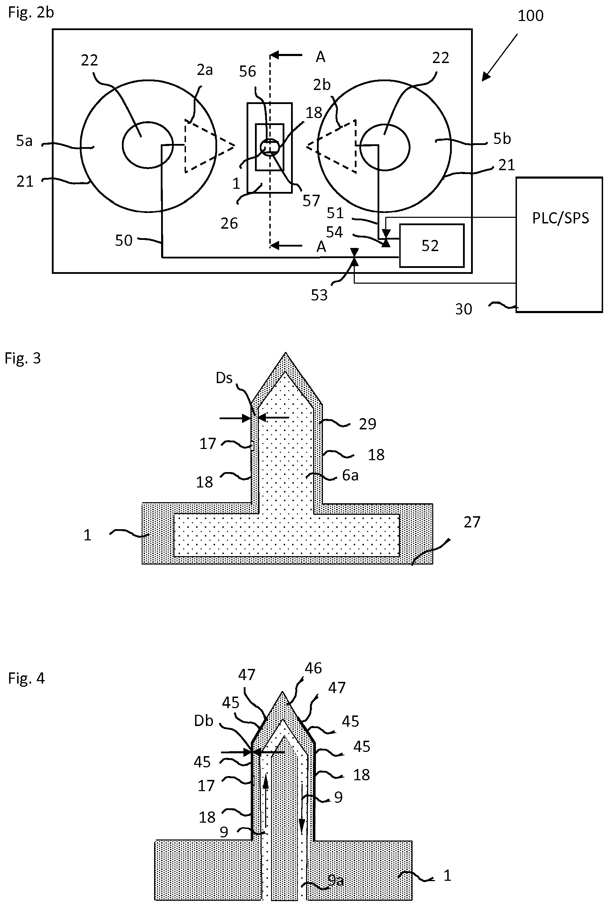

In den Fig. 2a und 2b wird schematisch eine Ausführungsform der Formstation dargestellt. Hierbei zeigt Fig. 2a eine Seitenansicht der Vorrichtung. Die Vorrichtung umfasst neben dem Dorn 1 als inneres Formwerkzeug die beiden äußeren Formwerkzeuge 5a und 5b, welche als Formrollen ausgebildet sind.

Bei der Formrolle 5a, 5b, handelt es sich jeweils bevorzugt um eine zylindersymmetrische Scheibe, welche im Bereich ihrer Mantelfläche die Formgebungsfläche 21 aufweist, welche für den Glaskontakt ausgebildet ist. Die Kontur der Formgebungsfläche entspricht dabei typischerweise einem Abschnitt der Kontur des herzustellenden, aus Glas bestehenden Werkstücks 6, insbesondere eines Glascontainers. Die Formrolle 5a, 5b besteht jeweils typischerweise zumindest im Bereich der Formgebungsfläche aus einem hochwarmfesten Material wie Stahl und kann abschnittweise auch aus Aluminium bestehen und ist jeweils um ihre jeweilige Symmetrieachse, somit der zylindersymmetrischen Achse drehbar gehalten.

Bei der gezeigten Ausführungsform sind jeweils zwei Sprühdüsen 2a und 2b fest an den Rollenhalterungen 22 der äußeren Formwerkzeuge 5a, 5b angebracht. Mit den Sprühdüsen 2a und 2b wird die Oberfläche, insbesondere die Kontaktoberfläche 18 des Dorns 1 in den Zwischentakten, d.h. zwischen zwei Umformprozessen, mit einem dünnen Ölfilm benetzt und somit geschmiert. Durch die Verwendung von zwei Sprühdüsen 2a und 2b wird eine besonders gleichmäßige Benetzung der Dornoberfläche erreicht. Nach der Minimalschmierung wird ein zuvor erwärmtes Werkstück 6 in die Formstation eingebracht. Diese Einrichtung 20 zur Erwärmung kann eine mit einem fossilen Brennstoff betriebenen Brenner umfassen, dessen Flamme 24 über die äußere Oberfläche des Werkstücks 6 so lange geführt wird, bis dieses die erwünschte Temperatur aufweist.

Bei dieser Temperatur, auf welche das Werkstück 6 erwärmt wurde liegen Viskositäten von 10^{3,5} bis 10^{5,5} dPas vor.

Ein bevorzugtes Glas, aus welchem das Werkstück 6 besteht, oder welches das Werkstück 6 umfasst ist, ohne Beschränkung des für viele, sogar für die meisten heißformbaren Gläser geeigneten Verfahrens oder der für viele, sogar für die meisten heißformbaren Gläser geeigneten Vorrichtung, ein Borosilikatglas, insbesondere ein Borosilikatglas des Typs 1 nach USP und EP.

Hier ist das Werkstück 6 als Glasrohr ausgebildet. Zum Formen oder Ausformen wird der Dorn 1 in das Werkstück 6 in der durch den Pfeil 7 dargestellten Richtung eingeführt, so dass die Konturen des Dorns 1 auf die inneren Mantelflächen 25 des Werkstücks 6 übertragen werden. Gleichzeitig dreht sich das Werkstück 6 und die Konturen der äußeren Formwerkzeuge 5a und 5b werden auf die äußeren Mantelflächen des Werkstücks übertragen. Hierbei geraten die Kontaktoberflächen 18 des Dorns 1 in direkten, mechanischen Kontakt mit den inneren Mantelflächen oder der inneren Mantelfläche 25 des Werkstücks 6, welche dabei relativ zum stationären Dorn 1 in eine Rotationsbewegung versetzt sind. Die Geschwindigkeiten der hierbei auftretenden Relativbewegungen der Formwerkzeuge, insbesondere des inneren Formwerkzeugs oder Dorns 1 relativ zum Werkstück 6 entsprechen dabei im Wesentlichen den herkömmlichen und dem Fachmann bekannten Geschwindigkeiten bei der Heißformung und mussten nicht für die Zwecke der Erfindung geändert oder speziell angepasst werden.

Der Dorn 1 ist als inneres Formwerkzeug in oder an der Aufnahme 26 jeweils derart gehalten, dass diesem Wärme entziehbar und/oder bei manchen Ausführungsformen zur Beschleunigung von dessen Erwärmung auch zuführbar ist.

Bei Dornen 1, welche nicht über innere Kühlkanäle verfügen und somit als passiv gekühlt bezeichnet werden, kann dies jeweils mittels einer Wärmeaustauschfläche 27 des Dorns 1, erfolgen, welche in direktem mechanischen Kontakt mit einer zugeordneten Wärmeaustauschfläche 28 der Aufnahme 26 steht. Mittels dieser Wärmeaustauschflächen 27, 28 ist dem Dorn 1, insbesondere durch die PLC/SPS gesteuert und insbesondere durch Einstellung der Temperatur der Wärmeaustauschfläche 28 Wärme so entziehbar und/oder zuführbar, dass hierdurch auch dessen Temperatur definiert einstellbar ist.

Die Größe der jeweiligen Wärmeaustauschflächen 27, 28, siehe beispielsweise Figur 2a, entsprach in etwa der Größe der jeweiligen Kontaktoberflächen 18 und betrug etwa 0,1 bis 5 cm².

Die Bewegungen des Dorns 1 werden durch den Pfeil 7 und die Bewegung des Werkstücks 6 wird durch den Pfeil 8 symbolisiert. Hierbei kennzeichnen die Pfeile 7 und 8 jeweils die Relativbewegung des Dorns 1 relativ zum Werkstück 6.

Fig. 2b zeigt die oben beschriebene Vorrichtung in einer Draufsicht, d.h. von oben. Die Sprühdüsen 2a und 2b werden hier durch gestrichelte Linien dargestellt, da sich die Sprühdüsen 2a und 2b unterhalb der Formwerkzeuge 5a und 5b befinden.

Die Düsen 2, 2a, 2b waren, wie beispielhaft der Figur 2a zu entnehmen jeweils über in dieser Figur lediglich schematisch dargestellte Öl- und Luftzuleitungen 50, 51 mit einer jeweils zugeordneten Versorgungseinrichtung 52 für die Zufuhr von Öl und Luft verbunden. Mittels elektrisch ansteuerbarer Ventile 53, 54 konnte sowohl die Zufuhr von Luft, insbesondere Druckluft, als auch von Öl durch die speicherprogrammierbare Steuerung 30 zeitlich definiert gesteuert vorgenommen werden. Lediglich um der Einfachheit des Verständnis Willen ist nicht jede der jeweiligen Zuleitungen einzeln dargestellt, sondern erschließ sich beispielsweise auch aus der Darstellung der Figur 5, in welcher die jeweiligen, mit diesen Zuleitungen versehenden Luftkanäle 11a, 11b, 13a, 13b und die Ölzuleitung 12 detaillierter zu erkennen sind. Einer jeder dieser Leitungen ist jeweils ein Ventil unter der Steuerung der speicherprogrammierbaren Steuerung 30 zugeordnet, jedoch um der Klarheit Willen nicht explizit, sondern symbolisch durch die Ventile 53 und 54 dargestellt.

Die Versorgung der Luftkanäle 11a, 11b, 13a, 13b konnte bei der in Figur 5 dargestellten Düse 2 sowie den Düsen 2a, 2b mit einem Druck von 1 bis 6 bar erfolgen und überstieg eine Luftmenge von 100 l/min nicht. Bei bevorzugten Ausführungsformen konnten sogar Luftmengen von weniger als 10 l/min verwendet werden. Bei bevorzugten Ausführungsformen betrug der effektive Durchmesser der Düse für den Austritt der Luft zwischen 0,5 mm bis 3 mm. Als effektiver Durchmesser wird hierbei der für den Austritt der Luft wirksame hydraulisch äquivalente Durchmesser verstanden, welcher in dessen Wirkung insgesamt den Luftzuführungen 11a, 11b, 13a, 13b entsprach. Der Durchmesser der Ölzuleitung 12 sowie der Förderdruck des Öls war jeweils so eingestellt, dass während eines Auftrags oder Sprühstoßes, die jeweils erwünschte Menge des Öls betriebssicher austreten konnte.

Durch diese mittels der speicherprogrammierbaren Steuerung gesteuerte Anordnung konnte jeweils zumindest eine Sprühdüse 2, 2a, 2b oder auch mehrere dieser Sprühdüsen zum Aufbringen des Öls als Schmiermittel auf die Oberfläche des Formwerkzeugs 1 einstellbar angesteuert werden, wobei die pro Formschritt und Auftrag, somit pro Sprühstoß abgegebene Ölmenge kleiner als 0,1 g einstellbar vorgenommen werden. Um der Kürze und der einfacheren Lesbarkeit Willen werden die Sprühdüsen 2, 2a, 2b im Rahmen dieser Offenbarung auch vereinfacht nur als Düsen bezeichnet.

Fig. 3 ist eine schematische Darstellung eines Dorns 1 als inneres Formwerkzeug, der einen inneren Kern 6a aus Kupfer aufweist. Der Kupferkern 6a ermöglicht hierbei eine schnelle und effektive Wärmeableitung. Alternativ kann der Kern 6a auch aus anderen Materialien mit hoher Wärmeleitfähigkeit wie beispielsweise Kupferlegierungen, Silber oder silberhaltigen Legierungen bestehen. Diese Art der Kühlung mittels Wärmeleitung im Festkörper des Dorns 1 wird im Rahmen dieser Offenbarung generell auch als passive Kühlung bezeichnet.

Der den Kupferkern 6a umgebende weitere Teil 29 des Dorns 1 besteht ebenfalls aus einem HSS-Stahl. Die Schichtdicke Ds dieses weiteren Teils 29 beträgt in dem hinter den Kontaktoberflächen 18 liegenden Bereichs, siehe beispielsweise Figur 3, weniger als 1 mm, bei bevorzugten Ausführungsformen weniger als 0,5 mm und bevorzugt mehr als 0,2 mm.

Bei den beschriebenen Ausführungsformen mit passiver Kühlung werden die Formwerkzeughalterungen oder Aufnahmen der Formwerkzeuge insbesondere der inneren und der äußeren Formwerkzeuge gekühlt.

Dadurch bleibt der Kühlkreislauf jederzeit geschlossen und ein Kühlmittelaustritt wird verhindert. Die indirekte oder passive Kühlung ist so ausgelegt, dass minimalste Ölmengen auf den Formwerkzeugen nicht verdampfen und damit eine ausreichende Schmierung zur Formtrennung des heißen Glases von den Formwerkzeugen gewährleistet ist. Durch den Einsatz minimaler Ölmengen reduzieren sich die Ablagerungen auf den Formwerkzeugen, was die Formwerkzeugstandzeit von 2h auf 8h erhöht und die Produktionsunterbrüche reduziert. Dadurch entstehen auch weniger Anfahrverluste. Die Reduzierung der Ablagerungen führt auch zu einer geringeren Streuung der Maßabweichungen oder der Produktverschmutzungen.

Die Formwerkzeuge können zur Reinigung mittels eines Schnellspannstiftes ausgetauscht werden, wie dieses auch in den Figuren 6 und 9 und 10 beispielhaft dargestellt ist und nachfolgend detaillierter beschrieben wird, wodurch die Maschinenstillstandzeit reduziert wird.

Das passiv gekühlte System ist so konstruiert, dass keine Pneumatikschläuche oder Kühlmittelschläuche demontiert werden müssen.

Beim Dorn 1 wird die Wärme durch z.B. einen Kupferkern 6a oder ein anderes gut wärmeleitendes Material im Inneren des Dornes 1 abgeführt. Dabei weist das innere Formwerkzeug, insbesondere der Dorn 1 bevorzugt einen Kern 6a auf, welcher ein Material mit einer Wärmeleitfähigkeit von zumindest 400 W/mK umfasst und/oder Kupfer enthält.

Das Formwerkzeug 1 ist bei bevorzugten Ausführungsformen, welche nachfolgend noch detaillierter beschrieben werden, einfach von dessen Aufnahme 26, welche auch als Kühlkörper wirkt, trennbar. Die indirekte Kühlung ermöglicht dadurch einen einfachen Ausbau und Austausch des jeweiligen Werkzeugs, insbesondere des Dorns 1, zumal keine Kühlanschlüsse direkt daran befestigt sind.

In Fig. 4 wird schematisch eine alternative Ausführungsform des Dorns 1 dargestellt. Der in Fig. 4 gezeigte Dorn 1 weist eine aktive Kühlung auf. Hierzu enthält der Dorn 1 im Inneren einen Kühlkanal 9a, durch den ein Kühlmedium, beispielsweise eine Kühlflüssigkeit fließt. Die Bewegungsrichtung des Kühlmediums wird durch den Pfeil 9 symbolisiert. Als Kühlmedium kann beispielsweise Wasser, Luft, ein Aerosol oder ein Öl verwendet werden. Durch die aktive Kühlung kann die vom heißen Glas des Werkstücks 6 abgegebene Wärme besonders effektiv abgeführt und somit Dorntemperaturen kleiner 250°C oder sogar kleiner 200°C erhalten werden.

Fig. 5 zeigt eine schematische Darstellung des Sprühbildes einer Koaxial-Sprühdüse 10, wie sie gemäß einer Ausführungsform in der erfindungsgemäßen Vorrichtung verwendet wird. Koaxial-Sprühdüsen haben sich hierbei als besonders vorteilhaft herausgestellt, da durch die Einstellung der abgegebenen Mantelluft das Sprühbild maßgeblich beeinflusst werden kann.

Die in Fig. 5 dargestellte Koaxialdüse 10 weist neben einer Ölzuleitung 12 vier Luftkanäle 11a, 11b sowie 13a und 13b auf. Beim Sprühvorgang werden somit nicht nur Ölpartikel 16 aus der Ölzuleitung 12, sondern gleichzeitig auch Sprühluft aus den Luftkanälen 11a, 11b, 13a und 13b abgegeben. Die Bewegungsrichtung während des Sprühvorgangs wird durch die Pfeile symbolisiert. Die aus den Luftkanälen 11a und 11b abgegebene Sprühluft bildet dabei mit dem aus der Ölzuleitung 12 abgegebenen Öl ein Aerosol als Öl-Luftstrahl 14.

Die aus den Luftkanälen 13a und 13b abgegebene Mantelsprühluft bildet die Sprühluftstrahlen 15a und 15b, welche dem aus dem Düsenzentrum abgegebenen Öl-Luftstrahl 14 seine Richtungsstabilität verleihen und somit einen präzisen Öl-Luftstrahl ermöglichen. Der Öl-Luftstrahl oder bei einem Sprühstoß abgegebene Sprühstrahl 3, 3a, 3b weist hierbei einen Öffnungswinkel β > 1° auf. Als besonders vorteilhaft in Hinblick auf die lokale Verteilung des Öls auf dem Dorn hat sich ein Öffnungswinkel β im Bereich von 3 bis 6° herausgestellt, siehe beispielsweise auch die Darstellung der Figur 2a bezüglich des Öffnungswinkels β. Gemäß einer bevorzugten Ausführungsform beträgt der Öffnungswinkel 5°.

Der Öl-Gasstrahl 14 weist somit zwar fein verteilte Ölpartikel 16 auf, gleichzeitig wird durch die Mantelsprühluft 15a und 15b die Ausbreitung des Aerosols im Raum verhindert und die Bildung eines stabilen Öl-Luftstrahls 14 beziehungsweise Sprühstrahls 3, 3a, 3b ermöglicht. Somit kann auch mit geringen Ölmengen eine präzise, gleichmäßige und vollständige Benetzung des Formwerkzeugs, beispielsweise einer Dornoberfläche, insbesondere der Kontaktoberfläche 18 mit Öl erfolgen. Hierdurch ist es möglich, die pro Sprühtakt und Formschritt aufgebrachte Ölmengen auf unter 2 mg zu verringern, ohne dass die Schmierwirkung beim Umformprozess beeinträchtigt wird. Dies entspricht einer Verringerung der pro Formschritt zugeführten Ölmenge im Vergleich zum Stand der Technik um mehr als zwei Größenordnungen. Neben einer Einsparung von Öl führt dies zu einer geringeren Verschmutzung der Produkte sowie der Prozessanlage, was wiederum geringere Ausfallzeiten, beispielsweise durch eine notwenige Reinigung der Anlage, zur Folge hat.

Die Verteilung des Öls auf dem Formwerkzeug 1 kann nochmals verbessert werden, wenn nach der Abgabe der definierten Ölmenge mit reiner Sprühluft nachgeblasen wird. Eine bevorzugte Ausführungsform sieht daher vor, dass die Sprühdüse 2, 2a, 2b nach Beendigung der Ölzufuhr jeweils reine Sprühluft nachbläst.

In einem Ausführungsbeispiel wurden Fläschchen mit einem Volumen von 15 ml kontinuierlich an einem Rundläufer hergestellt. An der Anlage befanden sich mehrere Formwerkzeuge, welche unter anderem auch zur Herstellung einer Fläschchen-Innenrille, welche im Verlauf dieser Offenbarung auch als Nut bezeichnet wird, genutzt werden konnten. Das für die Minimalschmierung eingesetzte Öl besaß eine Viskosität bei 40°C von 200-240 mm/s und einen Flammpunkt von >246°C. Jeder Dorn wurde mit jeweils zwei fest installierten Rundsprühdüsen mit einem festen horizontalen Einsprüh- oder Sprühwinkel α von etwa 20° bei einem Abstand Dornoberfläche-Düsenspitze von 15 mm geschmiert. Die pro Takt und Sprühstoß auf die Dorne aufgebrachten Ölmengen lagen zwischen 0,002-0,0002 g bei einer Sprühzeit von 0,14 s. Die Dorne wurden während des Prozesses aktiv und passiv auf Oberflächentemperaturen zwischen 190-280°C gekühlt.

Bevorzugt werden dabei die Sprühdüsen 2, 2a, 2b mit einem Korrekturfaktor, der die Raum- und/oder Düsentemperatur berücksichtigt, auf eine fixe Durchflussmenge prozessabhängig kalibriert welche zwar abhängig vom gewählten Maschinentakt, jedoch stets kleiner als 0,5 g/s war.

Durch die Temperaturmessung nahe der Düsen, beispielsweise mittels des Thermoelements 17, kann auch im Betrieb eine Korrektur bei erhöhter Temperatur für die Sprühdüsen berechnet und in der zugeordneten speicherprogrammierbaren Steuerung, PLC/SPS, umgesetzt werden. Es erfolgt hierbei eine temperaturabhängige Anpassung der Sprühdauer, welche sicherstellt, dass jeweils nur die angegebenen Mengen an Öl auf das innere Formwerkzeug 1, insbesondere auf die Form- oder Kontaktoberflächen 18 und vorzugsweise den Bereich 47 aufgesprüht werden. Das Verfahren kann auf verschiedene Schmiermittel umgesetzt werden und ist nicht nur auf ein bestimmtes Öl beschränkt.

Es hat sich dabei in überraschender Weise herausgestellt, dass eine Vielzahl von Ölen für die Zwecke der Erfindung verwendet werden kann, ohne dass dabei Einschränkungen bezüglich des erfindungsgemäßen Erfolgs hinzunehmen waren.

Beispiele für derartige Öle und deren Eigenschaften zeigt die nachfolgende Tabelle 1:

**Tabelle 1**

| Öl | Dichte bei 15°C [g/cm³] | Viskosität bei 40°c | [mm2/s] bei 100°C | Flammpunkt [°C] |
|---|---|---|---|---|
| Typ 1 | 0,892 | 150,5 | 15,3 | 235 |
| Typ 2 | 0,843 | 155,6 | 20 | 252 |
| Typ 3 | 0,83 | 200-240 | 20-30 | 260 |

Dabei wurde das unter dem Handelsnahmen als Panolin HVP erhältliche Öl als Typ 1, Panolin Orcon Vitra als Typ 2 und GTI als Typ 3 verwendet.

Hierbei hat sich eine Öl- oder Schmiermittel-Bedeckungsschichtdicke zumindest der Flächen mit Glaskontakt, somit der Kontaktoberfläche 18 und vorzugsweise des Bereichs 47, von <750 µm als vorteilhaft erwiesen.

Dies entsprach bei einer der vorstehend beschriebenen Ausführungsformen etwa 0.1 g Panolin HVP.

Hierbei hatte das innere Formwerkzeug, insbesondere der Dorn 1 eine Kontaktoberfläche 18 mit einer Größe von etwa typisch 0,1 cm² bis 5 cm²

Die Erfinder gehen dabei sogar davon aus, dass bereits zumindest eine Molekül-Monologe des verwendeten Öls ausreicht, um die hier beschriebenen Wirkungen zu erzielen.

Eine besonders vorteilhaft eingestellte Sprühmenge entsprach generell und unabhängig vom jeweiligen Formwerkzeug einer Bedeckungsschichtdicke von <75 µm. Diese Bedeckungschichtdicke lag beispielhaft bei ungefähr 1mg Öl pro Sprühstoß für die hier beschriebenen Dorne 1 vor.

Die bevorzugten Bedeckungschichtdicke umfassten bei allen verwendeten Formwerkzeugen, insbesondere dem inneren Formwerkzeug, somit dem Dorn 1 bei weiteren bevorzugten Ausführungsformen auch Schichtdicken mit nur einer, oder vorzugsweise nur bis 10 Monolagen der Moleküle des aufgetragenen Öls.

Bei weiteren Ausführungsformen wies die Bedeckungschichtdicke Schichtdicken von bis zu <750 µm, bevorzugt von bis zu <75 µm auf.

Beispielhaft ist diese Bedeckungschicht 45, welche sich jeweils vollflächig über der jeweiligen Formoberfläche, insbesondere Kontaktoberfläche 18 erstreckt auch Figur 4 zu entnehmen und stellt eine geschlossene Oberflächenschicht auf der jeweiligen Form- oder Kontaktoberfläche 18 bereit.

Diese Bedeckungschicht 45 weist die vorstehend beschriebene Bedeckungschichtdicke Db auf, welche bei einer bevorzugten Ausführungsform innerhalb der vorstehend beschriebenen Grenzen von einer, bevorzugt bis zu zehn molekularen Monolagen lag.

Aufgrund dieses sehr variablen Dickenbereichs Db der erfindungsgemäß verwendbaren Bedeckungsschichten stellten die Erfinder in höchst überraschender Weise fest, dass hierbei auch die jeweilige Größe der Formoberfläche, insbesondere der Kontaktoberfläche 18 und der mit Öl bedeckte Bereich 47 des kegelstumpfförmigen Abschnitts 46 des inneren Formwerkzeugs oder Dorns 1 nur eine sehr untergeordnete Rolle spielte.

Vorteilhaft konnte dabei auch, insbesondere bei allen hier beschriebenen Ausführungsformen zumindest ein weiterer Bereich des inneren Formwerkzeugs, insbesondere des Dorns 1, in gleicher Weise mit dieser Bedeckungschicht 45, welche die vorstehend beschriebene Bedeckungschichtdicke Db aufwies, versehen werden, nämlich jeweils der Bereich 47, welcher sich ebenfalls als Form- oder Kontaktoberfläche zumindest teilweise von der jeweiligen Kontaktoberfläche 18 zur Spitze des kegelstumpfförmigen Abschnitts 46 des Dorns 1 erstreckte, jedoch nicht in allen Fällen die Spitze des Dorns 1 erreichen musste.

Dieser Bereich 47 des kegelstumpfförmigen Abschnitts 46 war dann ausreichend mit Öl beschichtet, wenn noch alle seine mit dem Glas des zu formenden Werkstücks 6 in Kontakt tretenden Bereiche die vorstehend beschriebene Bedeckungssichtdicke Db aufwiesen. Da dieser Bereich 47 jedoch von dem jeweiligen inneren Durchmesser des Werkstücks 6 vor seiner Formung abhängt, konnte folglich auch die Größe dieser Bereiche 47 jeweils dem zu formenden Werkstück so angepasst werden, dass das Werkstück 6 nur mit den mit Öl bedeckten Bereichen des Dorns 1 in Kontakt trat.

War der innere Durchmesser des Werkstücks 6 vor der Formung nur geringfügig kleiner als der Durchmesser D des Dorns 1 oder als der effektive äußere Durchmesser des Dorns 6, somit der, bei der Formung wirksame radiale Abstand der Kontaktoberflächen 18 relativ zueinander, konnten auch die Bereiche 47 entsprechen klein werden.

Generell waren bei den bevorzugten Ausführungsformen die bei der Formung mit dem Glas des Werkstücks 6 in Kontakt tretenden Bereiche der jeweiligen Formoberfläche, insbesondere der Kontaktoberfläche 18 sowie des Bereichs 47 des kegelstumpfförmigen Abschnitts 46 der Formwerkzeuge, insbesondere des inneren Formwerkzeugs, somit des Dorns 1 jeweils vollflächig mit einer das Öl umfassenden Bedeckungsschicht 45 versehen. Diese Bedeckungsschicht wies dabei jeweils die vorstehend beschriebene Bedeckungssichtdicke auf.

In höchst überraschender Weise konnten die Erfinder dabei feststellen, dass es dadurch im Wesentlichen unerheblich wurde, welche Eigenschaften das Schmiermittel hatte, da mit den vorstehend beschriebenen temperaturabhängigen Kalibrierungen, im Wesentlichen eine Entkopplung von der Ölmenge sowie von dessen Dichte, Viskosität und Volumen sowie der Größe des Formwerkzeuges stattfand, da höchst überraschend bereits eine vollflächig, insbesondere auf die Kontaktoberflächen 18 aufgetragene monomolekulare Ölschicht für die Zwecke der Erfindung ausreichte.

In der PLC/SPS sind Vergleichstabellen hinterlegt, in welchen zu jeder Temperatur und vorzugsweise zu dem jeweils verwendeten Öl, Zeiten und/oder zeitliche Intervalle hinterlegt sind, mittels welchen die jeweils aufgesprühten Mengen des Öls erfasst sind, welche zu den vorstehend beschriebenen Bedeckungsschichtdicken führen. Basierend auf diesen Tabellen werden jeweils zur aktuellen und insbesondere mit dem Temperatursensor 17 gemessenen Temperatur Zeiten oder zeitliche Intervalle zur Ansteuerung der Düsen 2, 2a, 2b, 10 vorgegeben, innerhalb welcher sichergestellt ist, dass die korrekte Menge an Öl zumindest auf die jeweiligen Form- oder Kontaktoberflächen aufgebracht wird.

Nachfolgend wird auf Figur 6 Bezug genommen, welche eine Aufsicht auf eine Ausführungsform eines inneren Formwerkzeugs, insbesondere Dorns 1 zeigt, bei welcher das innere Formwerkzeug 1 mittels einer Rastvorrichtung, insbesondere mittels eines Schnellspannstifts 31 an der zugeordneten Aufnahme 26 der Formstation 100 in seiner betriebsbereiten Stellung gehalten und passiv gekühlt ist.

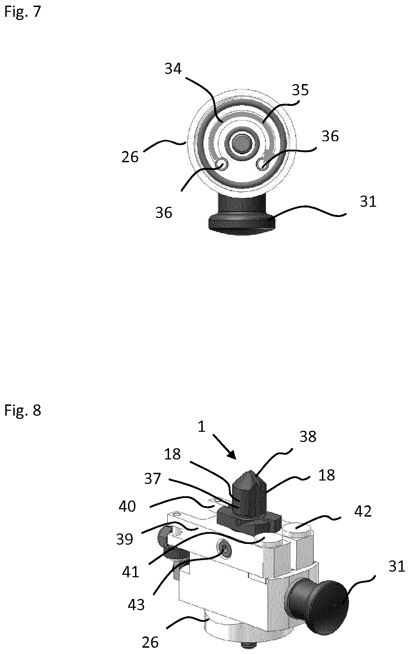

In gleicher Weise wie vorstehend für den aktiv mit dessen Kühlkanälen 9a gekühlten Dorn 1 vorstehend beschrieben, kann auch die Aufnahme 26 mit deren Kühlkanal 34 von einem Kühlmedium, bevorzugt einer Kühlflüssigkeit durchspült oder durchströmt sein und gibt dabei der Pfeil 35 die Strömungsrichtung des Kühlmediums, bevorzugt der Kühlflüssigkeit an. Der Kühlkanal 34 ist in Figur 7 lediglich schematisch dargestellt, da sich dieser im Inneren der Aufnahme 26 befindet und normalerweise in dieser Ansicht nicht sichtbar wäre. Sichtbar sind jedoch die dem Kühlkanal 34 zugeordneten Fluidanschlüsse 36 der Aufnahme 26.

Die Figuren 8 bis 10 zeigen eine weitere Ausführungsform, bei welcher das innere Formwerkzeug, insbesondere der Dorn 1 mehrteilig, zumindest zweiteilig ausgeführt ist, und dessen effektiver äußerer Durchmesser mittels relativer Bewegung von zumindest zwei Hälften 37, 38 des inneren Formwerkzeugs, insbesondere des Dorns 1, einstellbar ist.

Figur 8 zeigt dabei eine Aufsicht auf die weitere Ausführungsform des inneren Formwerkzeugs, insbesondere Dorns 1, bei welcher das innere Formwerkzeug mittels einer Rastvorrichtung, insbesondere mittels dem Schnellspannstift 31 an der zugeordneten Aufnahme 26 der Formstation 100 in seiner betriebsbereiten Stellung gehalten und passiv gekühlt ist.

Die beiden Hälften 37, 38 des Dorns 1 sind jeweils an zugeordneten Armen 39, 40 gehalten, welche jeweils um ein zugeordnetes Schwenklager 41, 42 seitlich so verschwenkbar gehalten sind, dass hierdurch der Abstand der beiden Hälften 37, 38 des Dorns 1 relativ zueinander einstellbar ist.

Durch eine Verschwenkung der Arme 39 und 40 kann der effektive äußere Durchmesser des Dorns 1 eingestellt werden, dies bedeutet, es kann der Abstand, insbesondere der radiale Abstand der Kontaktoberflächen 18, jeweils bezogen auf deren Längsachse relativ zueinander und somit deren für eine Formung wirksamer Durchmesser eingestellt werden.

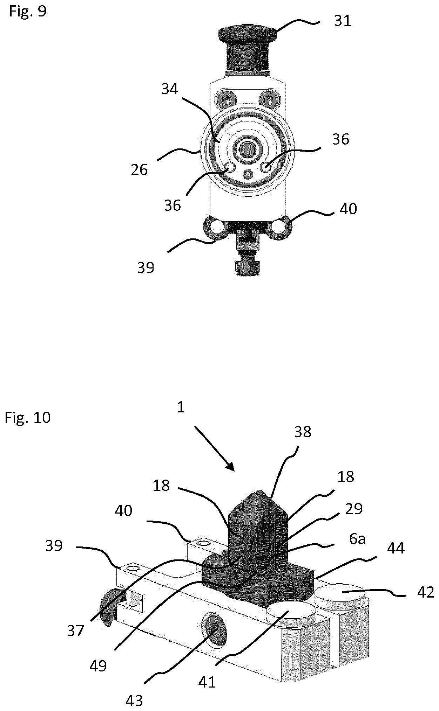

Im Arm 39 befindet sich, siehe beispielsweise Figur 10, eine vorzugsweise mit Feingewinde versehene Stellschraube 43, welche stirnseitig an einer im Arm 40 angeordneten Stellschraube 44, welche ebenfalls vorzugsweise mit einem Feingewinde versehen ist, wenn die Arme 39, 40 aufeinander zu verschwenkt sind, anliegt. Die Stellschraube 44 ist in gleicher Weise im Arm 40 angeordnet, wie die Stellschraube 43 im Arm 39. Mit diesen Stellschrauben 43, 44 lassen sich die bei der Formung wirksamen effektiven Außendurchmesser der Kontaktoberflächen 18 jeweils sehr präzise und dauerbetriebsfest einstellen.

Ferner ist eine Nut 49 im inneren Formwerkzeug, insbesondere im Dorn 1 und dessen beiden Hälften 37, 38 angeordnet, mittels welcher sich eine lippen- oder ringförmige umlaufende Erhebung in dem zu formenden Werkstück 6 ausbilden lässt. Wird diese Nut 49 als ringförmige Erhebung ausgebildet, kann hiermit eine ringförmige Nut im Werkstück 6 ausgebildet werden. Hierzu werden zunächst die beiden Hälften 37, 38 aufeinander zu bewegt und verharren in dieser Stellung, bis der Dorn 1 mit diesen beiden Hälften in das Wertstück 6 zur dessen Formung eingebracht wurde. Danach können die beiden Hälften 37, 38 zur Formung etwas von einander weg geschwenkt werden, sodass hierbei die Kontur der Nut 49 oder einer entsprechenden Erhebung in das zu formende Werkstück 6 übertragen wurde. Nach der Formung oder dem Formungsprozess, welcher auch mehrere Formungsschritte mit zunehmender Beabstandung der Hälften 37, 38 umfassen kann, werden diese Hälften 37, 38 wieder aufeinander zu verschwenkt und können den geformten Werkstück 6 entnommen oder aus diesem herausbewegt werden, ohne dass es dabei zu einer Schädigung oder Veränderung der geformten inneren Oberfläche des Werkstücks 6 kommt.

Figur 9 zeigt eine Ansicht der Aufnahme 26 des inneren Formwerkzeugs oder Dorns 1 der weiteren Ausführungsform von unten her gesehen bei welcher ein Kühlkanal 34 mit dessen Fluidanschlüssen 36 erkennbar ist, welcher in der Aufnahme 26 verläuft, wie es im Wesentlichen bereits unter Bezugnahme auf Figur 7 beschrieben wurde.

Die Messung der Temperatur erfolgte - wie oben beschrieben - über in die Dorne 1 nahe der Oberfläche eingelötete Thermoelemente 17. Die optische Überwachung der Fläschchen-Dimension zeigte dabei die stabile Produktion innerhalb der Produktspezifikationen. Nahezu keine Rauchentwicklung war während der Herstellung erkennbar, die Verschmutzung umliegender Anlagenbereiche war stark verringert. Die geschmierten und unterhalb des Flammpunkts des Öles gekühlten Formwerkzeuge 1 wiesen auch nach langer Anlagenlaufzeit von mehreren Stunden keine Rückstände von Ölverbrennungs- und Crackrückstanden auf.

### Bezugszeichenliste

- 1: inneres Formwerkzeug, insbesondere Dorn
- 2: Sprühdüse
- 2a, b: Sprühdüse
- 3: Sprühstrahl
- 3a, 3b: Sprühstrahl
- 4: Abstand
- 5: Formwerkzeuge, insbesondere äußere Formwerkzeuge
- 5a b: Formwerkzeuge, insbesondere äußere Formwerkzeuge
- 6: Werkstück, insbesondere aus Glas
- 6a: innerer Kern des Dorns, insbesondere aus Kupfer bestehend
- 7: Pfeil zur Angabe der Bewegungsrichtung
- 8: Pfeil zur Angabe der Bewegung des Dorns und sowie des Werkstücks 6
- 9: Pfeil zur Angabe der Bewegung der Kühlflüssigkeit
- 9a: Kühlkanal
- 10: Koaxial-Sprühdüse
- 11a, b: Luftkanäle
- 12: Ölzuleitung
- 13a, b: Luftkanäle
- 14: Öl-Luftstrahl
- 15a, b: Sprühluftstrahl
- 16: Ölpartikel
- 17: Thermoelement
- 18: Kontaktoberfläche
- 19: Pfeil zur Angabe der Blickrichtung
- 20: Einrichtung zum Erwärmen
- 21: Formgebungsfläche
- 22: Rollenhalterung
- 23: Öffnung am Kopf der Sprühdüse 2
- 24: Flamme der Einrichtung 20
- 25: innere Mantelfläche des Werkstücks 6
- 26: Aufnahme des inneren Formwerkzeugs, insbesondere des Dorns 1
- 27: Wärmeaustauschfläche des Dorns 1
- 28: zugeordneten Wärmeaustauschfläche der Aufnahme 26
- 29: den Kupferkern 6a umgebender weiterer Teil des Dorns 1
- 30: Speicherprogrammierbare Steuerung
- 31: Schnellspannstift
- 34: Kühlkanal
- 35: Pfeil zur Darstellung der Strömungsrichtung
- 36: Fluidanschluss
- 37: Hälfte des zweiteiligen Dorns 1
- 38: Hälfte des zweiteiligen Dorns 1
- 39: Arm zur Halterung der Hälfte 37 des zweiteiligen Dorns 1
- 40: Arm zur Halterung der Hälfte 38 des zweiteiligen Dorns 1
- 41: Schwenklager
- 42: Schwenklager
- 43: Stellschraube
- 44: Stellschraube
- 45: Bedeckungsschicht
- 46: kegelstumpfförmiger Abschnitt des inneren Formwerkzeugs oder Dorns 1
- 47: mit Öl bedeckter Bereich des kegelstumpfförmigen Abschnitts des inneren Formwerkzeugs oder Dorns 1
- 49: Nut im inneren Formwerkzeug, insbesondere im Dorn 1
- 50: Öl- und Luftzuleitung
- 51: Öl- und Luftzuleitung
- 52: Versorgungseinrichtung für die Zufuhr von Öl und Luft
- 53: elektrisch ansteuerbares Ventil
- 54: elektrisch ansteuerbares Ventil
- 56: abgeflachter Bereich des inneren Formwerkzeugs oder Dorns 1
- 57: abgeflachter Bereich des inneren Formwerkzeugs oder Dorns 1

## Patentansprüche

1. Vorrichtung zum Formen eines Werkstücks aus Glas mit zumindest folgenden Komponenten:
- einer Einrichtung zum Erwärmen des Werkstücks
- einer Formstation mit zumindest einem Formwerkzeug zum Formen des Werkstücks, wobei
- das Formwerkzeug eine Wärmeableitung aufweist und das Formwerkzeug ein Material mit einer Wärmeleitfähigkeit von zumindest 400 W/mK aufweist,
- wobei die Temperatur auf der Kontaktoberfläche des Formwerkzeugs während des Formprozesses unterhalb von 300°C gehalten ist
- und zumindest eine Sprühdüse zum Aufbringen eines Öls als Schmiermittel auf die Oberfläche des Formwerkzeugs, insbesondere auf eine Form- oder Kontaktoberfläche des Formwerkzeugs, wobei die pro Formschritt und Auftrag abgegebene Ölmenge kleiner als 0,1 g einstellbar ist und
bei welcher die bei der Formung mit dem Glas des Werkstücks in Kontakt tretenden Bereiche der jeweiligen Formoberfläche jeweils vollflächig mit einer das Öl umfassenden Bedeckungsschicht versehbar sind.

2. Vorrichtung gemäß dem vorstehenden Anspruch, bei welcher die Formstation zumindest ein inneres und ein äußeres Formwerkzeug zum Formen der inneren und äußeren Mantelflächen des Werkstücks aufweist und bei welcher das innere Formwerkzeug bevorzugt als Dorn ausgebildet ist.

3. Vorrichtung gemäß einem der vorstehenden Ansprüchen, bei welcher mittels der Sprühdüse das Öl in Zwischentakten des Formprozesses auf die Oberfläche des Formwerkzeugs aufbringbar ist.

4. Vorrichtung gemäß einem der vorstehenden Ansprüche, bei welcher die Sprühdüse derart ausgebildet ist, dass ein richtungsstabiler Öl-Gasstrahl gebildet wird und/oder die Sprühdüse in der Vorrichtung so angeordnet ist, dass ein vertikaler Winkel γ zur Dornoberfläche im Bereich von 0-60° und ein horizontaler Winkel α zur Dornoberfläche im Bereich von -85° bis 85° liegt und/oder der laterale Abstand von der Sprühdüse zur Oberfläche des Formwerkzeugs 1 bis 50 mm, bevorzugt 10 bis 30 mm beträgt.

5. Vorrichtung gemäß dem vorstehenden Anspruch, bei welcher die Vorrichtung zum Formen eines rohrförmigen Werkstücks ausgebildet ist.

6. Vorrichtung gemäß einem der vorstehenden Ansprüche, bei welcher die Sprühdüse eine koaxiale Sprühdüse ist und/oder der Öl-Gasstrahl einen Öffnungswinkel > 1°, bevorzugt im Bereich von 2 bis 10°, besonders bevorzugt 2 bis 6° aufweist.

7. Vorrichtung gemäß einem der vorstehenden Ansprüche, bei welcher die Vorrichtung mehrere Sprühdüsen pro Dorn, bevorzugt zwei Sprühdüsen pro Dorn aufweist.

8. Vorrichtung gemäß einem der vorstehenden Ansprüche, bei welcher die Sprühdüse oder die Sprühdüsen fest mit der Formstation verbunden sind.

9. Vorrichtung gemäß einem der vorstehenden Ansprüche 1 bis 8, bei welcher die Sprühdüse oder die Sprühdüsen nicht stationär mit der Formstation verbunden sind und in den Zwischentakten des Formprozesses an den Dorn oder in dessen Nähe führbar sind.

10. Vorrichtung gemäß einem der vorstehenden Ansprüche, bei welcher die pro Formschritt und Auftrag abgegebene Ölmenge < 0,01 g und bevorzugt < 0,005 g und besonders bevorzugt < 0,001 g ist.

11. Vorrichtung gemäß einem der vorstehenden Ansprüche, bei welcher die Dauer des Sprühvorgangs < 0,5 s, bevorzugt < 0,3 s, besonders bevorzugt 0,1 bis 0,2 s beträgt.

12. Vorrichtung gemäß einem der vorstehenden Ansprüche, bei welcher die Temperatur auf der Kontaktoberfläche des Formwerkzeugs während des Formprozesses auf einen Wert von < 250°C, bevorzugt < 200°C einstellbar ist.

13. Vorrichtung gemäß einem der vorstehenden Ansprüche, bei welcher die Temperatur der Kontaktoberfläche des Formwerkzeugs, insbesondere die Kontaktoberfläche des Dorns, während des Formprozesses kleiner als die Verdampfungstemperatur und/oder als der Flammpunkt des verwendeten Öls, bevorzugt 10°C niedriger als die Verdampfungstemperatur und/oder als der Flammpunkt des verwendeten Öls ist.

14. Vorrichtung gemäß einem der vorstehenden Ansprüche, bei welcher das innere Formwerkzeug ein Material mit einer Wärmeleitfähigkeit von zumindest 400 W/mK aufweist und/oder Kupfer enthält.

15. Vorrichtung nach einem der vorstehenden Ansprüche, bei welcher das innere Formwerkzeug, insbesondere der Dorn einen Kern aufweist, welcher ein Material mit einer Wärmeleitfähigkeit von zumindest 400 W/mK aufweist und/oder Kupfer enthält.

16. Vorrichtung nach einem der vorstehenden Ansprüche, bei welcher das innere Formwerkzeug, insbesondere der Dorn in einer Aufnahme derart gehalten ist, dass diesem Wärme entziehbar und/oder zuführbar ist, insbesondere mittels einer Wärmeaustauschfläche des inneren Formwerkzeugs, insbesondere Dorns, welche in direktem mechanischem Kontakt mit einer zugeordneten Wärmeaustauschfläche der Aufnahme steht, Wärme entziehbar und/oder zuführbar ist.

17. Vorrichtung nach einem der vorstehenden Ansprüche, bei welcher das innere Formwerkzeug, insbesondere der Dorn mittels einer Verriegelungsvorrichtung lösbar an der Aufnahme gehalten ist.

18. Vorrichtung nach einem der vorstehenden Ansprüche, bei welcher das innere Formwerkzeug, insbesondere der Dorn mehrteilig, zumindest zweiteilig ausgeführt ist und dessen effektiver äußerer Durchmesser mittels relativer Bewegung von zumindest zwei Hälften des inneren Formwerkzeugs, insbesondere des Dorns, einstellbar ist.

19. Vorrichtung gemäß einem der vorstehenden Ansprüche, bei welcher das Formwerkzeug, bevorzugt das innere Formwerkzeug mit einem Kühlmedium, bevorzugt einer Kühlflüssigkeit durchspült ist.

20. Vorrichtung nach einem der vorstehenden Ansprüche, bei welcher die bei der Formung mit dem Glas des Werkstücks in Kontakt tretenden Bereiche der jeweiligen Formoberfläche, insbesondere der Kontaktoberfläche sowie vorzugsweise ein Bereich eines kegelstumpfförmigen Abschnitts des inneren Formwerkzeugs, somit des Dorns, jeweils vollflächig mit einer das Öl umfassenden Bedeckungsschicht versehbar sind und die Bedeckungsschichtdicke der Bedeckungsschicht Werte von bis zu <750 um, bevorzugt bis zu <75 µm aufweist und insbesondere bevorzugt die Bedeckungsschicht nur eine oder nur bis zu zehn molekulare Monolagen des Öls umfasst.

21. Verfahren zum Formen eines Werkstücks aus Glas, vorzugsweise mit einer Minimalschmierung, umfassend die folgenden Verfahrensschritte:
- Erwärmen des vorzugsweise rohrförmigen Werkstücks aus Glas bis zum Erweichen des Glases,
- Formen des Werkstücks mit einem Formwerkzeug, insbesondere mit einer Vorrichtung zum Formen eines Werkstücks aus Glas gemäß einem der vorstehenden Ansprüche, in einem Formungsschritt, wobei
- die Temperatur der Kontaktoberfläche des Formwerkzeugs mit dem Werkstück während des Ausformens bei höchstens 300°C gehalten wird und
- zumindest die Kontaktoberfläche des Formwerkzeugs mit einem Öl als Schmiermittel bedeckt wird, wobei
- das Öl vor dem Formprozess und/oder zwischen zwei Formprozessen, vorzugsweise mit zumindest einer Sprühdüse, auf die Oberfläche des Formwerkzeugs aufgesprüht wird und wobei pro Formschritt weniger als 0,1 g Öl abgegeben werden und
bei welcher die bei der Formung mit dem Glas des Werkstücks in Kontakt tretenden Bereiche der jeweiligen Formoberfläche jeweils vollflächig mit einer das Öl umfassenden Bedeckungsschicht versehen werden.

22. Verfahren gemäß vorstehendem Anspruch, bei welchem die inneren und äußeren Mantelflächen des Werkstücks durch zumindest ein inneres und ein äußeres Formwerkzeug geformt oder ausgebildet werden und wobei bevorzugt das innere Formwerkzeug als Dorn ausgebildet ist.

23. Verfahren gemäß Anspruch 21 oder 22, bei welchem durch die Sprühdüse Öl und Gas, insbesondere Luft, ausgestoßen wird, so dass ein richtungsstabiler Öl-Gasstrahl, bevorzugt ein richtungsstabiler Öl-Gasstrahl mit einem Öffnungswinkel > 1° gebildet wird.

24. Verfahren gemäß einem der Ansprüche 21, 22 oder 23, bei welchem die Sprühdüse so angeordnet wird, dass ein vertikaler Winkel γ zur Dornoberfläche im Bereich von 0 bis 60° und ein horizontaler Winkel α zur Dornoberfläche im Bereich von -85° bis 85° liegt.

25. Verfahren gemäß einem der vorstehenden Ansprüche 21 bis 24, bei welchem die pro Formschritt und Auftrag abgegebene Ölmenge < 0,005 g und bevorzugt < 0,001 g beträgt und/oder bei welchem die Dauer eines Sprühstoßes zum Aufsprühen oder Sprühen des Öls < 0,5 s, bevorzugt < 0,3 s und besonders bevorzugt 0,1 bis 0,2 s beträgt.

26. Verfahren gemäß einem der vorstehenden Ansprüche 21 bis 25, bei welchem die Temperatur der Form- oder Kontaktoberfläche des Formwerkzeugs während des Formprozesses < 250°C, bevorzugt < 200°C beträgt und/oder die Temperatur der Form- oder Kontaktoberfläche des Formwerkzeugs während des Formprozesses kleiner als die Verdampfungstemperatur und/oder als der Flammpunkt des verwendeten Öls, bevorzugt zumindest 10°C niedriger als die Verdampfungstemperatur und/oder als der Flammpunkt des verwendeten Öls ist.

27. Verfahren gemäß einem der vorstehenden Ansprüche 21 bis 26, bei welchem dem inneren Formwerkzeug während des Formprozesses mittels Wärmeleitung durch Festkörperkontakt Wärme zu oder abgeführt wird.

28. Verfahren gemäß einem der vorstehenden Ansprüche 21 bis 27, bei welchem das innere Formwerkzeug, insbesondere der Dorn während des Formprozesses mit einem Kühlmedium, bevorzugt einer Kühlflüssigkeit durchspült wird.

29. Verfahren nach einem der vorstehenden Ansprüche 21 bis 28, bei welcher die bei der Formung mit dem Glas des Werkstücks in Kontakt tretenden Bereiche der jeweiligen Formoberfläche, insbesondere der Kontaktoberfläche sowie vorzugsweise eine Bereich eines kegelstumpfförmigen Abschnitts des inneren Formwerkzeugs, somit des Dorns, jeweils vollflächig mit einer das Öl umfassenden Bedeckungsschicht versehen werden, wobei bevorzugt die Bedeckungsschichtdicke der Bedeckungsschicht Werte von bis zu <750 um, besonders bevorzugt bis zu <75 µm aufweist und insbesondere bevorzugt die Bedeckungsschicht nur eine oder nur bis zu zehn molekulare Monolagen des Öls umfasst.

## Claims

1. A device for moulding a workpiece made of glass, comprising at least the following components:
- a means for heating the workpiece;
- a moulding station with at least one moulding tool for moulding the workpiece; wherein
- the moulding tool comprises heat dissipation means and the moulding tool comprises a material having a thermal conductivity of at least 400 W/mK;
- wherein the temperature on the contact surface of the moulding tool during the moulding process is kept below 300 °C;
- and at least one spray nozzle for applying an oil as a lubricant onto the surface of the moulding tool, in particular onto a moulding or contact surface of the moulding tool, wherein the amount of oil dispensed per moulding step and application instance is adjustable to less than 0.1 g; and
wherein the areas of the respective moulding surface coming into contact with the glass of the workpiece during the moulding can each be provided with a full-surface covering layer comprising the oil.

2. The device according to the preceding claim, wherein the moulding station comprises at least one inner and one outer moulding tool for moulding the inner and outer lateral surfaces of the workpiece, and wherein the inner moulding tool is preferably in the form of a mandrel.

3. The device according to any one of the preceding claims, wherein the oil can be applied to the surface of the moulding tool in intermediate clock cycles of the moulding process, by the spray nozzle.

4. The device according to any one of the preceding claims, wherein the spray nozzle is configured so as to produce a directionally stable oil-gas jet; and/or
wherein the spray nozzle is arranged within the device so as to form a vertical angle γ with the mandrel surface ranging from 0 to 60°, and a horizontal angle α with the mandrel surface ranging from -85° to 85°; and/or wherein the lateral spacing between the spray nozzle and the surface of the moulding tool is from 1 to 50 mm, preferably from 10 to 30 mm.

5. The device according to the preceding claim, wherein the device is configured for moulding a tubular workpiece.

6. The device according to any one of the preceding claims, wherein the spray nozzle is a coaxial spray nozzle; and/or wherein the oil-gas jet has an opening angle > 1°, preferably in a range from 2 to 10°, most preferably from 2 to 6°.

7. The device according to any one of the preceding claims, wherein the device comprises a plurality of spray nozzles per mandrel, preferably two spray nozzles per mandrel.

8. The device according to any one of the preceding claims, wherein the one or more spray nozzle(s) are firmly mounted to the moulding station.

9. The device according to any one of the preceding claims 1 to 8, wherein the one or more spray nozzle(s) are not stationarily mounted to the moulding station and can be approached to or close to the mandrel in the intermediate clock cycles of the moulding process.

10. The device according to any one of the preceding claims, wherein the amount of oil dispensed per moulding step and application instance is < 0.01 g and preferably < 0.005 g and most preferably < 0.001 g.

11. The device according to any one of the preceding claims, wherein the duration of the spraying process is < 0.5 s, preferably < 0.3 s, most preferably 0.1 to 0.2 s.

12. The device according to any one of the preceding claims, wherein the temperature on the contact surface of the moulding tool during the moulding process is adjustable to a value of < 250 °C, preferably < 200 °C.

13. The device according to any one of the preceding claims, wherein, during the moulding process, the temperature of the contact surface of the moulding tool, in particular the contact surface of the mandrel, is lower than the evaporation temperature and/or than the flash point of the oil used, preferably lower by 10 °C than the evaporation temperature and/or than the flash point of the oil used.

14. The device according to any one of the preceding claims, wherein the inner moulding tool comprises a material which has a thermal conductivity of at least 400 W/mK and/or contains copper.

15. The device according to any one of the preceding claims, wherein the inner moulding tool, in particular the mandrel, has a core which comprises a material that has a thermal conductivity of at least 400 W/mK and/or contains copper.

16. The device according to any one of the preceding claims, wherein the inner moulding tool, in particular the mandrel, is held in a seat in such a manner that heat can be extracted therefrom and/or supplied thereto, in particular such that heat can be extracted therefrom and/or supplied thereto through a heat exchange surface of the inner moulding tool, in particular the mandrel, which is in direct mechanical contact with an associated heat exchange surface of the seat.

17. The device according to any one of the preceding claims, wherein the inner moulding tool, in particular the mandrel, is releasably supported on the seat by a locking device.

18. The device according to any one of the preceding claims, wherein the inner moulding tool, in particular the mandrel, consists of multiple pieces, at least of two pieces, and wherein it has an effective outer diameter that is adjustable by relative movement of at least two halves of the inner moulding tool, in particular the mandrel.

19. The device according to any one of the preceding claims, wherein the moulding tool, preferably the inner moulding tool, is flushed by a cooling medium, preferably a cooling liquid.

20. The device according to any one of the preceding claims, wherein the areas of the respective moulding surface coming into contact with the glass of the workpiece during the moulding, in particular of the contact surface and preferably an area of a frustoconical portion of the inner moulding tool, i.e. of the mandrel, can each be provided with a full-surface covering layer comprising the oil, and wherein the thickness of the covering layer is up to < 750 µm, preferably up to < 75 µm, and wherein most preferably the covering layer comprises only one or only up to ten molecular monolayers of the oil.

21. A method for moulding a workpiece made of glass, preferably with minimum lubrication, comprising the method steps of:
- heating the preferably tubular workpiece made of glass until the glass softens;
- moulding the workpiece using a moulding tool, in particular using an device for moulding a workpiece made of glass according to any one of the preceding claims, in a moulding step; wherein
- the temperature of the contact surface of the moulding tool with the workpiece is kept at not more than 300 °C during the moulding; and
- at least the contact surface of the moulding tool is covered by an oil as a lubricant; wherein
- the oil is sprayed onto the surface of the moulding tool prior to the moulding process and/or between two moulding processes, preferably by at least one spray nozzle, and wherein less than 0.1 g of oil is dispensed per moulding step; and
wherein the areas of the respective moulding surface coming into contact with the glass of the workpiece during the moulding are each provided with a full-surface covering layer comprising the oil.

22. The method according to the preceding claim, wherein the inner and outer lateral surfaces of the workpiece are moulded or formed by at least one inner and one outer moulding tool, and wherein the inner moulding tool is preferably in the form of a mandrel.

23. The method according to claim 21 or 22, wherein the spray nozzle ejects oil and gas, in particular air, in such a manner that a directionally stable oil-gas jet is formed, preferably a directionally stable oil-gas jet with an opening angle > 1°.

24. The method according to any one of claims 21, 22, or 23, wherein the spray nozzle is arranged such that a vertical angle γ with the mandrel surface ranges from 0 to 60°, and so that a horizontal angle α with the mandrel surface ranges from -85° to 85°.

25. The method according to any one of the preceding claims 21 to 24, wherein the amount of oil dispensed per moulding step and application instance is < 0.005 g and preferably less than 0.001 g; and/or wherein the duration of a spray burst for spray-applying or spraying the oil is < 0.5 s, preferably < 0.3 s, and most preferably from 0.1 to 0.2 s.

26. The method according to any one of the preceding claims 21 to 25, wherein the temperature of the moulding or contact surface of the moulding tool during the moulding process is < 250 °C, preferably < 200 °C; and/or wherein the temperature of the moulding or contact surface of the moulding tool during the moulding process is lower than the evaporation temperature and/or than the flash point of the oil used, preferably lower by at least 10 °C than the evaporation temperature and/or than the flash point of the oil used.

27. The method according to any one of the preceding claims 21 to 26, wherein heat is supplied to or extracted from the inner moulding tool during the moulding process by thermal conduction through solid-to-solid contact.

28. The method according to any one of the preceding claims 21 to 27, wherein the inner moulding tool, in particular the mandrel, is flushed by a cooling medium, preferably a cooling liquid, during the moulding process.

29. The method according to any one of the preceding claims 21 to 28, wherein the areas of the respective moulding surface coming into contact with the glass of the workpiece during the moulding, in particular of the contact surface and preferably an area of a frustoconical portion of the inner moulding tool, i.e. of the mandrel, are each provided with a full-surface covering layer comprising the oil, wherein, preferably, the thickness of the covering layer is up to < 750 µm, preferably up to < 75 µm, and wherein, most preferably, the covering layer comprises only one or only up to ten molecular monolayers of the oil.

## Revendications

1. Procédé de moulage d'une pièce en verre, comprenant au moins les composants suivants :
- un dispositif pour chauffer la pièce,
- un poste de moulage comportant au moins un outil de moulage pour la mise en forme de la pièce, sachant que
- l'outil de moulage présente une évacuation de chaleur et que l'outil de moulage présente un matériau ayant une conductivité thermique d'au moins 400 W/mK,
- la température à la surface de contact de l'outil de moulage étant maintenue en dessous de 300 °C pendant le processus de moulage,
- et au moins une buse de pulvérisation destinée à appliquer une huile en tant que lubrifiant sur la surface de l'outil de moulage, notamment sur une surface de moulage ou de contact de l'outil de moulage, la quantité d'huile délivrée par étape de moulage et par application pouvant être réglée à moins de 0,1 g, et
dans lequel les zones de la surface de moulage respective qui entrent en contact avec le verre de la pièce lors du moulage peuvent chacune être pourvues sur toute leur surface d'une couche de recouvrement comportant l'huile.

2. Dispositif selon la revendication précédente, dans lequel le poste de moulage présente au moins un outil de moulage interne et un outil de moulage externe pour le moulage des surfaces enveloppes intérieures et extérieures de la pièce, et dans lequel l'outil de moulage interne est de préférence réalisé sous forme de mandrin.

3. Dispositif selon l'une des revendications précédentes, dans lequel la buse de pulvérisation permet d'appliquer l'huile sur la surface de l'outil de moulage au cours de périodes intermédiaires du processus de moulage.

4. Dispositif selon l'une des revendications précédentes, dans lequel la buse de pulvérisation est réalisée de manière à ce qu'un jet huile-gaz à direction stable soit formé et/ou la buse de pulvérisation est mise en place dans le dispositif de manière à ce qu'un angle vertical γ avec à la surface du mandrin se situe dans la plage allant de 0 à 60° et un angle horizontal α avec la surface du mandrin se situe dans la plage allant de -85° à 85° et/ou la distance latérale de la buse de pulvérisation par rapport à la surface de l'outil de moulage soit de 1 à 50 mm, de préférence de 10 à 30 mm.

5. Dispositif selon la revendication précédente, dans lequel le dispositif est conçu pour le moulage d'une pièce tubulaire.

6. Dispositif selon l'une des revendications précédentes, dans lequel la buse de pulvérisation est une buse de pulvérisation coaxiale et/ou le jet huile-gaz présente un angle d'ouverture > 1°, de préférence dans la plage allant de 2 à 10°, et de manière particulièrement avantageuse de 2 à 6°.

7. Dispositif selon l'une des revendications précédentes, dans lequel le dispositif présente plusieurs buses de pulvérisation par mandrin, de préférence deux buses de pulvérisation par mandrin.

8. Dispositif selon l'une des revendications précédentes, dans lequel la buse de pulvérisation ou les buses de pulvérisation sont liées solidement au poste de moulage.

9. Dispositif selon l'une des revendications 1 à 8, dans lequel la buse de pulvérisation ou les buses de pulvérisation ne sont pas reliées de façon stationnaire au poste de moulage et peuvent être amenées sur le mandrin ou à proximité de celui-ci, au cours des périodes intermédiaires du processus de moulage.

10. Dispositif selon l'une des revendications précédentes, dans lequel la quantité d'huile délivrée par étape de moulage et par application est < 0,01 g et de préférence < 0,005 g, et de manière particulièrement avantageuse < 0,001 g.

11. Dispositif selon l'une des revendications précédentes, dans lequel la durée de l'opération de pulvérisation est < 0,5 s, de préférence < 0,3 s, et est de manière particulièrement avantageuse de 0,1 à 0,2 s.

12. Dispositif selon l'une des revendications précédentes, dans lequel la température sur la surface de contact de l'outil de moulage pendant le processus de moulage peut être réglée à une valeur de < 250 °C, de préférence < 200 °C.

13. Dispositif selon l'une des revendications précédentes, dans lequel la température de la surface de contact de l'outil de moulage, en particulier la surface de contact du mandrin, pendant le processus de moulage, est inférieure à la température d'évaporation et/ou au point d'inflammation de l'huile utilisée, de préférence inférieure de 10 °C à la température d'évaporation et/ou au point d'inflammation de l'huile utilisée.

14. Dispositif selon l'une des revendications précédentes, dans lequel l'outil de moulage interne présente un matériau ayant une conductivité thermique d'au moins 400 W/mK et/ou contient du cuivre.

15. Dispositif selon l'une des revendications précédentes, dans lequel l'outil de moulage interne, notamment le mandrin, comprend un noyau qui présente un matériau ayant une conductivité thermique d'au moins 400 W/mK et/ou contient du cuivre.

16. Dispositif selon l'une des revendications précédentes, dans lequel l'outil de moulage interne, notamment le mandrin, est tenu dans un logement de manière à ce que de la chaleur puisse en être extraite et/ou lui être apportée, qu'en particulier une surface d'échange de chaleur de l'outil de moulage interne, notamment du mandrin, qui est en contact mécanique direct avec une surface d'échange de chaleur associée du logement, permette d'extraire et/ou d'apporter de la chaleur.

17. Dispositif selon l'une des revendications précédentes, dans lequel l'outil de moulage interne, notamment le mandrin, est tenu de façon amovible sur le logement, à l'aide d'un dispositif de verrouillage.

18. Dispositif selon l'une des revendications précédentes, dans lequel l'outil de moulage interne, notamment le mandrin, est réalisé en plusieurs parties, et au moins en deux parties, et son diamètre extérieur effectif peut être réglé à l'aide d'un mouvement relatif d'au moins deux moitiés de l'outil de moulage interne, notamment du mandrin.

19. Dispositif selon l'une des revendications précédentes, dans lequel l'outil de moulage, de préférence l'outil de moulage interne, est traversé par un fluide de refroidissement, de préférence un liquide de refroidissement.

20. Dispositif selon l'une des revendications précédentes, dans lequel les zones de la surface de moulage respective, notamment de la surface de contact, et de préférence une zone d'une partie tronconique de l'outil de moulage interne, et donc du mandrin, qui entrent en contact avec le verre de la pièce lors du moulage peuvent chacune être pourvues sur toute leur surface d'une couche de recouvrement comportant l'huile, et l'épaisseur de la couche de recouvrement présente des valeurs allant jusqu'à < 750 µm, de préférence jusqu'à < 75 µm, et en particulier, la couche de recouvrement comporte de préférence une seule ou seulement jusqu'à dix monocouches moléculaires de l'huile.

21. Procédé de moulage d'une pièce en verre, de préférence avec une lubrification minimale, comprenant les étapes de procédé suivantes :
- chauffage de la pièce en verre, de préférence tubulaire, jusqu'au ramollissement du verre,
- moulage de la pièce avec un outil de moulage, notamment avec un dispositif de moulage d'une pièce en verre selon une des revendications précédentes, dans une étape de moulage, sachant que
- la température de la surface de contact de l'outil de moulage avec la pièce est maintenue à au maximum 300 °C pendant le moulage, et
- au moins la surface de contact de l'outil de moulage est recouverte d'une huile en tant que lubrifiant, sachant que
- avant le processus de moulage et/ou entre deux processus de moulage, l'huile est de préférence pulvérisée avec au moins une buse de pulvérisation sur la surface de l'outil de moulage, et sachant que moins de 0,1 g d'huile est délivré par étape de moulage, et
dans lequel les zones de la surface de moulage respective qui entrent en contact avec le verre de la pièce sont chacune pourvues sur toute leur surface d'une couche de recouvrement comportant l'huile.

22. Procédé selon la revendication précédente, selon lequel les surfaces enveloppes intérieures et extérieures de la pièce sont moulées ou mises en forme par au moins un outil de moulage interne et un outil de moulage externe, et selon lequel l'outil de moulage interne est de préférence réalisé sous forme de mandrin.

23. Procédé selon la revendication 21 ou 22, selon lequel la buse de pulvérisation expulse de l'huile et du gaz, en particulier de l'air, de sorte qu'un jet d'huile-gaz à direction stable est formé, de préférence un jet d'huile-gaz à direction stable ayant un angle d'ouverture > 1°.

24. Procédé selon l'une des revendications 21, 22 ou 23, selon lequel la buse de pulvérisation est disposée de manière à ce qu'un angle vertical γ avec à la surface du mandrin se situe dans la plage allant de 0 à 60° et un angle horizontal α avec la surface du mandrin se situe dans la plage allant de -85° à 85°.

25. Procédé selon l'une des revendications précédentes 21 à 24, selon lequel la quantité d'huile délivrée par étape de moulage et par application est < 0,005 g et de préférence < 0,001 g, et/ou selon lequel la durée d'un jet de pulvérisation pour le dépôt par pulvérisation ou la pulvérisation de l'huile est < 0,5 s, de préférence < 0,3 s, et est de manière particulièrement avantageuse de 0,1 à 0,2 s.

26. Procédé selon l'une des revendications précédentes 21 à 25, selon lequel la température de la surface de moulage ou de contact de l'outil de moulage est < 250 °C, de préférence < 200 °C pendant le processus de moulage, et/ou la température de la surface de moulage ou de contact de l'outil de moulage est inférieure, pendant le processus de moulage, à la température d'évaporation et/ou au point d'inflammation de l'huile utilisée, de préférence inférieure d'au moins 10 °C à la température d'évaporation et/ou au point d'inflammation de l'huile utilisée.

27. Procédé selon l'une des revendications précédentes 21 à 26, selon lequel de la chaleur est apportée à l'outil de moulage interne ou est évacuée de celui-ci pendant le processus de moulage, par conduction thermique par contact de corps solide.

28. Procédé selon l'une des revendications précédentes 21 à 27, selon lequel l'outil de moulage interne, notamment le mandrin, est parcouru par un fluide de refroidissement, de préférence un liquide de refroidissement, pendant le processus de moulage.

29. Procédé selon l'une des revendications précédentes 21 à 28, selon lequel les zones de la surface de moule respective, notamment de la surface de contact, et de préférence une zone d'une partie tronconique de l'outil de moulage interne, et donc du mandrin, qui entrent en contact avec le verre de la pièce lors du moulage peuvent chacune être pourvues sur toute leur surface d'une couche de recouvrement comportant l'huile, l'épaisseur de la couche de recouvrement présentant de préférence des valeurs allant jusqu'à < 750 µm, de préférence notamment jusqu'à < 75 µm, et en particulier, la couche de recouvrement comporte de préférence une seule ou seulement jusqu'à dix monocouches moléculaires de l'huile.
